(19) Europäisches Patentamt
European Patent Office
Office européen des brevets

(11) **EP 2 521 011 A1**

(12) **EUROPEAN PATENT APPLICATION**
published in accordance with Art. 153(4) EPC

(43) Date of publication:
**07.11.2012 Bulletin 2012/45**

(51) Int Cl.:
*G06F 3/041* (2006.01)   *G02B 1/11* (2006.01)
*G02F 1/1333* (2006.01)   *G09F 9/00* (2006.01)

(21) Application number: **10840750.3**

(22) Date of filing: **21.12.2010**

(86) International application number:
**PCT/JP2010/007387**

(87) International publication number:
**WO 2011/080890 (07.07.2011 Gazette 2011/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2009   JP 2009299005**

(71) Applicant: **Sony Corporation
Tokyo 108-0075 (JP)**

(72) Inventors:
• **KAJIYA, Shunichi
Tokyo (JP)**

• **ENDOH, Sohmei
Tokyo 108-0075 (JP)**
• **HAYASHIBE, Kazuya
Tokyo 108-0075 (JP)**

(74) Representative: **Müller - Hoffmann & Partner
Patentanwälte
Innere Wiener Straße 17
DE-81667 München (DE)**

(54) **CONDUCTIVE OPTICAL ELEMENT**

(57)     [Object] To provide a conductive optical element capable of achieving a wide range of surface resistance, and capable of achieving an excellent transmission property.

[Solving Means] A conductive optical element includes a substrate having a surface, a number of structures arranged on the surface of the substrate at fine pitches equal to or smaller than a wavelength of a visible light, and a transparent conductive film formed on the structure. The transparent conductive film has a shape modeled on shapes of the structures. An aspect ratio of the structures is 0.2 or more and 1.28 or less, and a film thickness of the transparent conductive film is 9 nm or more and 50 nm or less.

FIG.1

EP 2 521 011 A1

**Description**

Technical Field

The present invention relates to a conductive optical element. Specifically, the present invention relates to a conductive optical element having an antireflection function.

Background Art

In recent years, on a display device that a mobile apparatus or a mobile phone apparatus includes, a resistive touch panel for inputting information has been mounted. A resistive touch panel has a structure in which two conductive optical elements are arranged opposite. A conductive optical element functions as an electrode of a touch panel, and includes a transparent substrate such as a polymer film or a glass substrate and a transparent conductive film formed on the substrate and made of a material having a high refractive index such as ITO (Indium Tin Oxide) (for example, about 1.9-2.1).

As described above, because a touch panel is generally mounted on a display device, it is required not to degrade a display quality of the display device. However, because the refractive index of a conductive optical element is in the neighborhood of about 2.0, when a touch panel is mounted on a display surface of a display device, a reflected light increases, and a display quality of the display device is degraded.

Further, in a conductive optical element in a touch-panel use, required surface resistance values are different according to touch-panel systems. For example, in a digital resistive touch panel or an analog resistive one, a wide range of surface resistance of 100 Ω/-several 100 Ω/ is required. Because a surface resistance value depends on the thickness of a transparent conductive film of a conductive optical element, in order to obtain a surface resistance of the above-mentioned range, it is necessary to make a conductive film thickness larger. However, when a film thickness is large as described above, a reflected light increases, and an image quality of a display device is degraded. That is, it is difficult to make a wide range of surface resistance compatible with a high transmission property.

Conventionally, in order to improve a transmission property of a conductive optical element, a technology of forming an antireflection film is employed. For example, in Patent Document 1, a transparent conductive optical element in a touch-panel use in which an antireflection film is provided between a substrate and a transparent conductive film is proposed. The antireflection film is formed by laminating a plurality of dielectric films having different refractive indices in series. However, by using this technology, it is difficult to make a wide range of surface resistance compatible with a high transmission property, and a compatibility of both of those properties is desired.

Prior Art document

Patent Document

Patent Document 1: Japanese Patent Application Laid-open No. 2003-136625

Disclosure of the Invention

Problem to be solved by the Invention

Therefore, an object of the present invention is to provide a conductive optical element capable of achieving a wide range of surface resistance, and capable of achieving an excellent transmission property.

Means for solving the Problem

To solve the above-mentioned problem,
a first invention is
a conductive optical element having an antireflection function, including
a substrate having a surface,
a number of structures arranged on the surface of the substrate at fine pitches equal to or smaller than a wavelength of a visible light, and
a transparent conductive film formed on the structure, in which
the transparent conductive film has a shape modeled on shapes of the structures,
an aspect ratio of the structures is 0.2 or more and 1.28 or less, and
a film thickness of the transparent conductive film is 9 nm or more and 50 nm or less.

A second invention is
a touch panel, including
a first conductive optical element, and
a second conductive optical element facing the first conductive optical element, in which
at least one of the first and second conductive optical elements includes
a substrate having a surface,
a number of structures arranged on the surface of the substrate at fine pitches equal to or smaller than a wavelength of a visible light, and
a transparent conductive film formed on the structure,
the transparent conductive film has a shape modeled on shapes of the structures,
an aspect ratio of the structures is 0.2 or more and 1.28 or less, and
a film thickness of the transparent conductive film is 9 nm or more and 50 nm or less.

A third invention is
a liquid crystal display apparatus, including
a liquid crystal unit including first and second main surfaces,
a first polarizer formed on the first main surface,
a second polarizer formed on the second main surface, and
a touch panel arranged between the liquid crystal unit and the first polarizer, in which
the touch panel includes
a first conductive optical element, and
a second conductive optical element facing the first conductive optical element,
at least one of the first and second conductive optical elements includes
a substrate having a surface,
a number of structures arranged on the surface of the substrate at fine pitches equal to or smaller than a wavelength of a visible light, and
a transparent conductive film formed on the structure,
the transparent conductive film has a shape modeled on shapes of the structures,
an aspect ratio of the structures is 0.2 or more and 1.28 or less, and
a film thickness of the transparent conductive film is 9 nm or more and 50 nm or less.

A fourth invention is
a conductive optical element, including
a substrate having a surface, and
a transparent conductive layer formed on the surface of the substrate, in which
the transparent conductive layer has a surface on which a number of structures are formed at fine pitches equal to or smaller than a wavelength of a visible light, and
the structure has a transparent conductivity.

In the present invention, main structures are preferably arranged in a rectangular lattice shape or a quasi-rectangular lattice shape periodically. Here, a rectangular lattice indicates a lattice having a regular tetragon shape. A quasi-rectangular lattice is different from a lattice having a regular tetragon shape, and indicates a lattice having a distorted regular tetragon shape.

For example, in a case where the structures are arranged on a straight line, a quasi-rectangular lattice indicates a distorted rectangular lattice by enlarging a lattice having a regular tetragon shape in a straight arrangement direction (track direction) of the tracks. In a case where the structures are arrayed in a meandering manner, a quasi-rectangular lattice indicates a rectangular lattice obtained by distorting a lattice having a regular tetragon shape in the meandering array of the structures. Alternatively, it indicates a rectangular lattice obtained by distorting a lattice having a regular tetragon shape by enlarging it in a straight arrangement direction (track direction), and distorting it in the meandering array of the structures.

In the present invention, the structures are preferably arranged in a hexagonal lattice or a quasi-hexagonal lattice shape periodically. Here, a hexagonal lattice indicates a lattice having a regular hexagon shape. A quasi-hexagonal lattice is different from a lattice having a regular hexagon shape, and indicates a lattice having a distorted regular hexagon shape.

For example, in a case where the structures are arranged on a straight line, a quasi-hexagonal lattice indicates a distorted hexagonal lattice by enlarging a lattice having a regular hexagon shape in a straight arrangement direction (track direction) of the tracks. In a case where the structures are arrayed in a meandering manner, a quasi-hexagonal lattice indicates a hexagonal lattice obtained by distorting a lattice having a regular hexagon shape in the meandering array of the structures. Alternatively, it indicates a hexagonal lattice obtained by distorting a lattice having a regular hexagon shape by enlarging it in a straight arrangement direction (track direction), and distorting it in the meandering array of the structures.

In the present invention, an ellipse includes not only a mathematically-defined perfect ellipse but also an ellipse to which some distortion is added. A circular shape includes not only mathematically-defined perfect circle (true circle) but also a circular shape to which some distortion is added. Further, a structure is a convex-shaped or concave-shaped structure.

In the present invention, because the film thickness of the transparent conductive film is in a range of 9 nm or more and 50 nm or less, a wide range of surface resistance can be achieved. Further, because an aspect ratio of the structures is in a range of 0.63 or more and 1.12 or less, and the surface shape of a transparent conductive film is modeled on the shapes of the structures, an excellent transmission property can be achieved.

Effect of the Invention

As described above, according to the present invention, a wide range of surface resistance can be achieved, and an excellent transmission property can be achieved.

Brief Description of Drawings

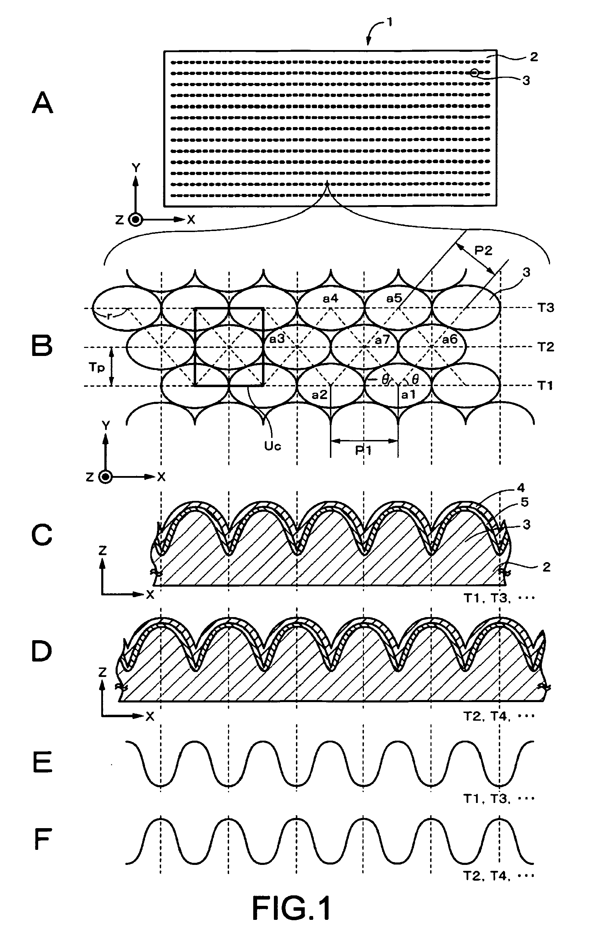

[Figs. 1] Fig. 1A is a schematic plan view showing one example of a structure of a conductive optical element according to a first embodiment of the present invention. Fig. 1B is a plan view showing the conductive optical element shown in Fig. 1A by enlarging part thereof. Fig. 1C is a sectional view of tracks T1, T3, ... of Fig. 1B. Fig. 1D is a sectional view of tracks T2, T4, ... of Fig. 1B. Fig. 1E is an abbreviated line diagram showing a modulated waveform of a laser light used to form a latent image corresponding to the tracks T1, T3, ... of Fig. 1B. Fig. 1F is an abbreviated line diagram showing a modulated waveform of a laser light used to form a latent image corresponding to the tracks T2, T4, ... of Fig. 1B.
[Fig. 2] Fig. 2 is a perspective view showing a conductive optical element shown in Fig. 1A by enlarging part thereof.
[Figs. 3] Fig. 3A is a sectional view of the conductive optical element shown in Fig. 1A in an extending direction of the tracks. Fig. 3B is a sectional view of the conductive optical element shown in Fig. 1A in a $\theta$ direction.
[Fig. 4] Fig. 4 is a perspective view showing the conductive optical element shown in Fig. 1A by enlarging part thereof.
[Fig. 5] Fig. 5 is a perspective view showing the conductive optical element shown in Fig. 1A by enlarging part thereof.
[Fig. 6] Fig. 6 is a perspective view showing the conductive optical element shown in Fig. 1A by enlarging part thereof.
[Fig. 7] Fig. 7 is a diagram for explaining a setting method of a structure bottom surface in a case where boundaries of the structures are unclear.
[Figs. 8] Fig. 8A-Fig. 8D are diagrams showing bottom surface shapes when ellipticities of the structure bottom surface are changed.
[Figs. 9] Fig. 9A shows one example of an arrangement of the structures having cone shapes or truncated-cone shapes. Fig. 9B shows one example of an arrangement of the structures having elliptic-cone shapes or elliptic-truncated-cone shapes.
[Figs. 10] Fig. 10A is a perspective view showing one example of the structure of a roll master for manufacturing a conductive optical element. Fig. 10B is a plan view showing the roll master shown in Fig. 10A by enlarging part thereof.
[Fig. 11] Fig. 11 is a schematic diagram showing one example of the structure of a roll-master exposure apparatus.
[Figs. 12] Fig. 12A-Fig. 12C are step diagrams for explaining a manufacturing method of the conductive optical element according to a first embodiment of the present invention.
[Figs. 13] Fig. 13A-Fig. 13C are step diagrams for explaining a manufacturing method of the conductive optical element according to a first embodiment of the present invention.
[Figs. 14] Fig. 14A-Fig. 14B are step diagrams for explaining a manufacturing method of the conductive optical element according to a first embodiment of the present invention.
[Figs. 15] Fig. 15A is a schematic plan view showing one example of a structure of a conductive optical element according to a second embodiment of the present invention.
Fig. 15B is a plan view showing the conductive optical element shown in Fig. 15A by enlarging part thereof. Fig. 15C is a sectional view of tracks T1, T3, ... of Fig. 15B.
Fig. 15D is a sectional view of tracks T2, T4, ... of Fig. 15B. Fig. 15E is an abbreviated line diagram showing a modulated waveform of a laser light used to form a latent image corresponding to the tracks T1, T3, ... of Fig. 15B.
Fig. 15F is an abbreviated line diagram showing a modulated waveform of a laser light used to form a latent image corresponding to the tracks T2, T4, ... of Fig. 15B.
[Fig. 16] Fig. 16 is a diagram showing bottom surface shapes when ellipticities of the bottom surfaces of the structures are changed.
[Figs. 17] Fig. 17A is a perspective view showing one example of the structure of a roll master for manufacturing a conductive optical element. Fig. 17B is a plan view showing the roll master shown in Fig. 17A by enlarging part thereof.

[Figs. 18] Fig. 18A is a schematic plan view showing one example of a structure of a conductive optical element according to a third embodiment of the present invention.

Fig. 18B is a plan view showing the conductive optical element shown in Fig. 18A by enlarging part thereof. Fig. 18C is a sectional view of tracks T1, T3, ... of Fig. 18B.

Fig. 18D is a sectional view of tracks T2, T4, ... of Fig. 18B.

[Figs. 19] Fig. 19A is a perspective view showing one example of the structure of a disk master for manufacturing a conductive optical element. Fig. 19B is a plan view showing the disk master shown in Fig. 19A by enlarging part thereof.

[Fig. 20] Fig. 20 is a schematic diagram showing one example of the structure of a disk master exposure apparatus.

[Figs. 21] Fig. 21A is a schematic plan view showing one example of a structure of a conductive optical element according to a fourth embodiment of the present invention.

Fig. 21B is a plan view showing the conductive optical element shown in Fig. 21A by enlarging part thereof.

[Figs. 22] Fig. 22A is a schematic plan view showing one example of a structure of a conductive optical element according to a fifth embodiment of the present invention.

Fig. 22B is a plan view showing the conductive optical element shown in Fig. 22A by enlarging part thereof. Fig. 22C is a sectional view of tracks T1, T3, ... of Fig. 22B.

Fig. 22D is a sectional view of tracks T2, T4, ... of Fig. 22B.

[Fig. 23] Fig. 23 is a perspective view showing the conductive optical element shown in Fig. 22A by enlarging part thereof.

[Figs. 24] Fig. 24A is a schematic plan view showing one example of a structure of a conductive optical element according to a sixth embodiment of the present invention.

Fig. 24B is a plan view showing the conductive optical element shown in Fig. 24A by enlarging part thereof, and Fig. 24C is a sectional view of tracks T1, T3, ... of Fig. 24B.

Fig. 24D is a sectional view of tracks T2, T4, ... of Fig. 24B.

[Fig. 25] Fig. 25 is a perspective view showing the conductive optical element shown in Fig. 24A by enlarging part thereof.

[Fig. 26] Fig. 26 is a graph showing one example of a refractive index profile of a conductive optical element according to the sixth embodiment of the present invention.

[Fig. 27] Fig. 27 is a sectional view showing one example of the shape of a structure.

[Figs. 28] Fig. 28A-Fig. 28C are diagrams for explaining definition of a change point.

[Fig. 29] Fig. 29 is a sectional view showing one example of structures of a conductive optical element according to a seventh embodiment of the present invention.

[Fig. 30] Fig. 30 is a sectional view showing one example of structures of a conductive optical element according to an eighth embodiment of the present invention.

[Figs. 31] Fig. 31A is a perspective view showing one example of the structure of a touch panel according to a ninth embodiment of the present invention. Fig. 31B is a sectional view showing one example of the structure of the touch panel according to the ninth embodiment of the present invention.

[Figs. 32] Fig. 32A is a perspective view showing a modified example of the touch panel according to the ninth embodiment of the present invention. Fig. 32B is a sectional view showing the modified example of the touch panel according to the ninth embodiment of the present invention.

[Figs. 33] Fig. 33A is a perspective view showing one example of the structure of a touch panel according to a tenth embodiment of the present invention. Fig. 33B is a sectional view showing one example of the structure of the touch panel according to the tenth embodiment of the present invention.

[Fig. 34] Fig. 34 is a sectional view showing one example of the structure of a liquid crystal display device according to an eleventh embodiment.

[Fig. 35] Fig. 35 is a graph showing a relation between the surface resistance and the film thickness of conductive optical sheets according to Examples 1-3.

[Fig. 36] Fig. 36 is a graph showing the transmission property of the conductive optical sheets according to Examples 1-3.

[Fig. 37] Fig. 37 is a graph showing a relation between the "ITO film thickness x surface resistance" and the "aspect ratio" of the conductive optical sheets of Examples 4-11.

[Fig. 38] Fig. 38 is a graph showing a relation between the "ITO film thickness x surface resistance" and the "aspect ratio" when the film thickness of an ITO film is converted to 30 nm.

[Fig. 39] Fig. 39 is a graph showing the average reflection coefficients of conductive optical sheets of Examples 12-17 and Comparative Examples 1-5.

[Fig. 40] Fig. 40 is a graph showing the average transmittances of the conductive optical sheets of Examples 12-17 and Comparative Examples 1-5.

Best Modes for Carrying Out the Invention

Embodiments of the present invention will be described with reference to the drawings in the following order.

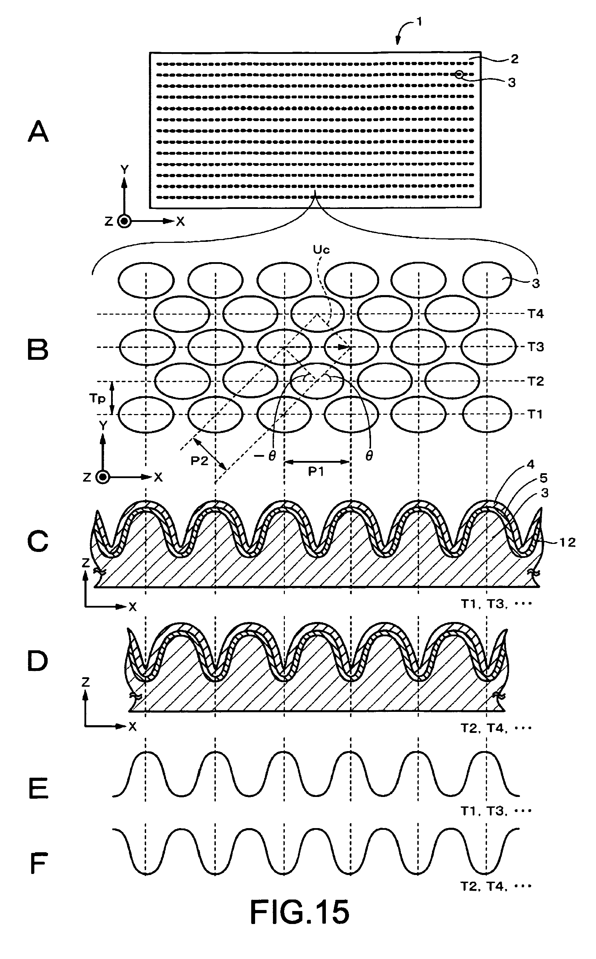

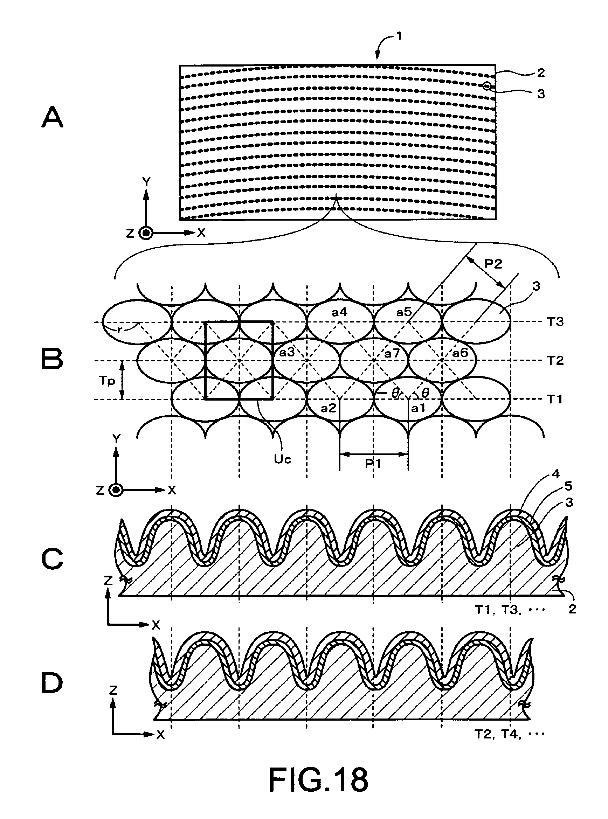

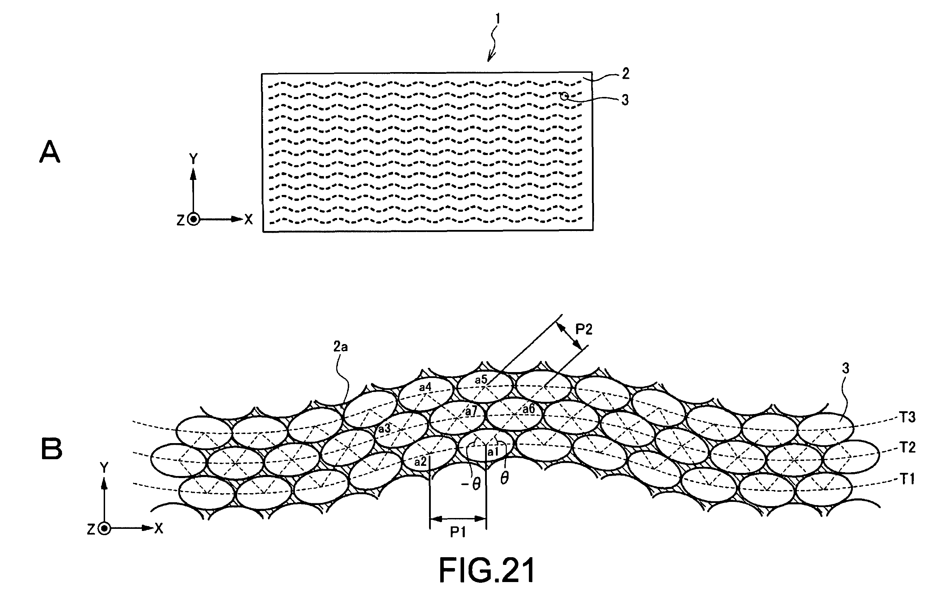

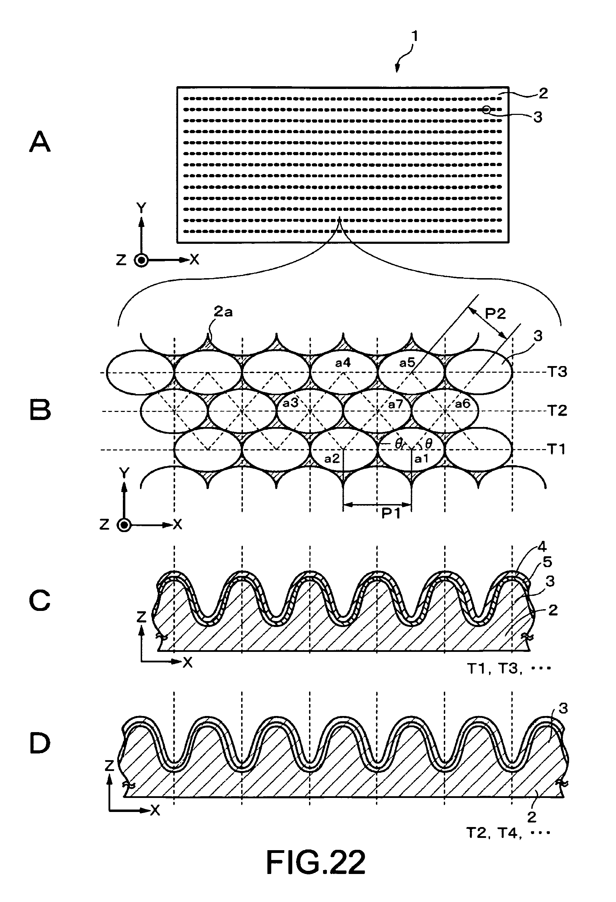

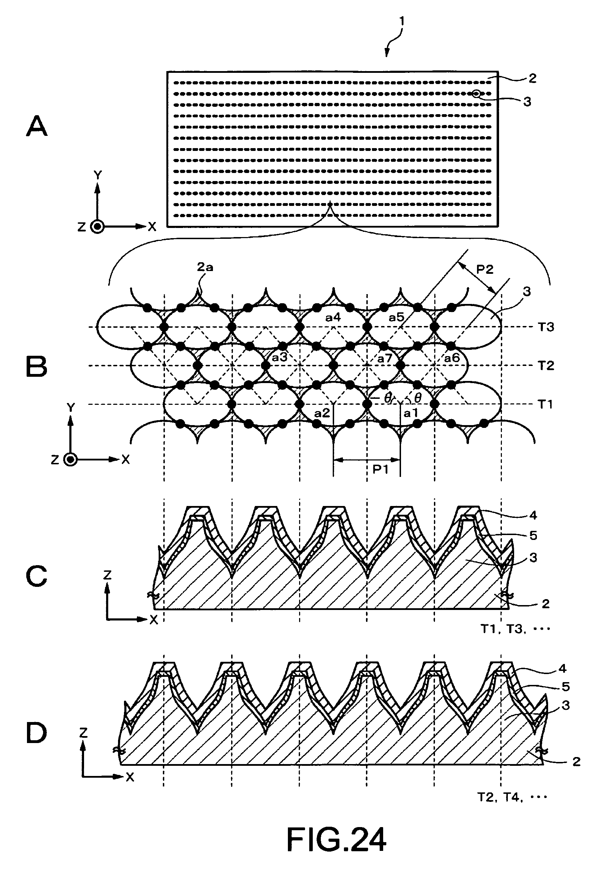

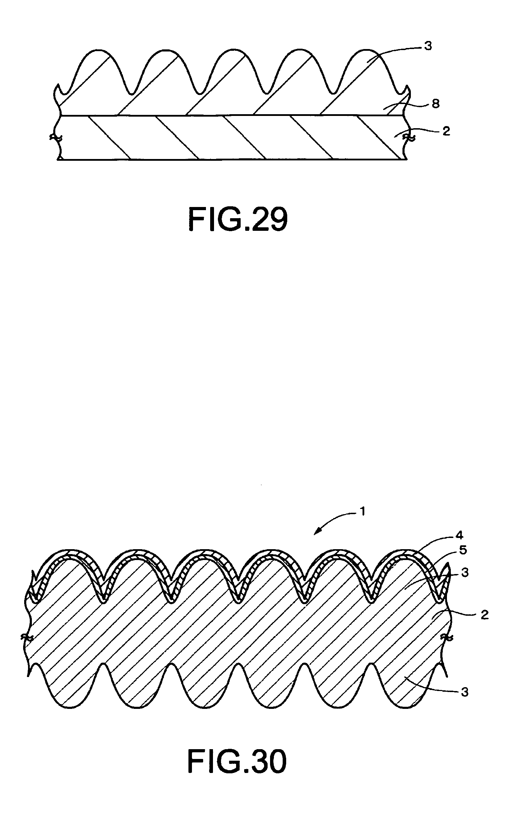

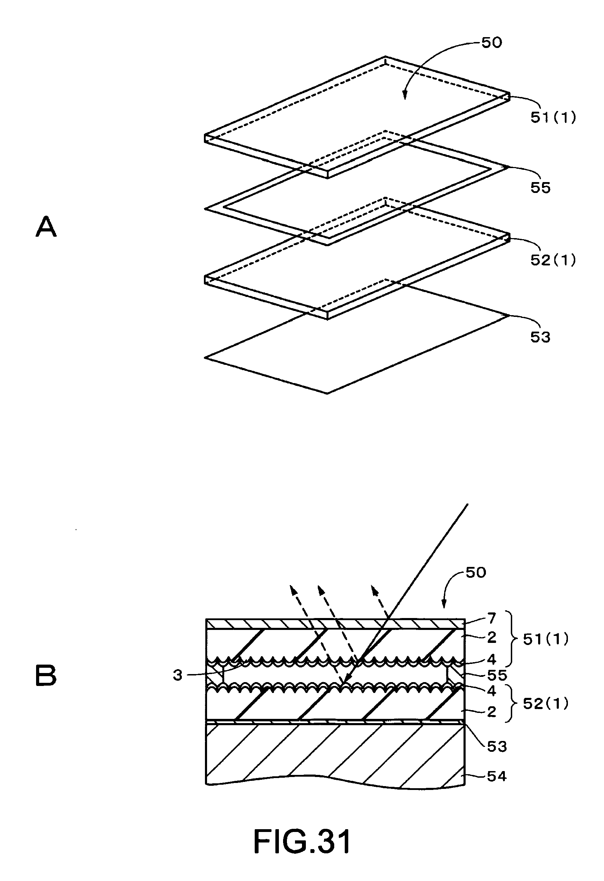

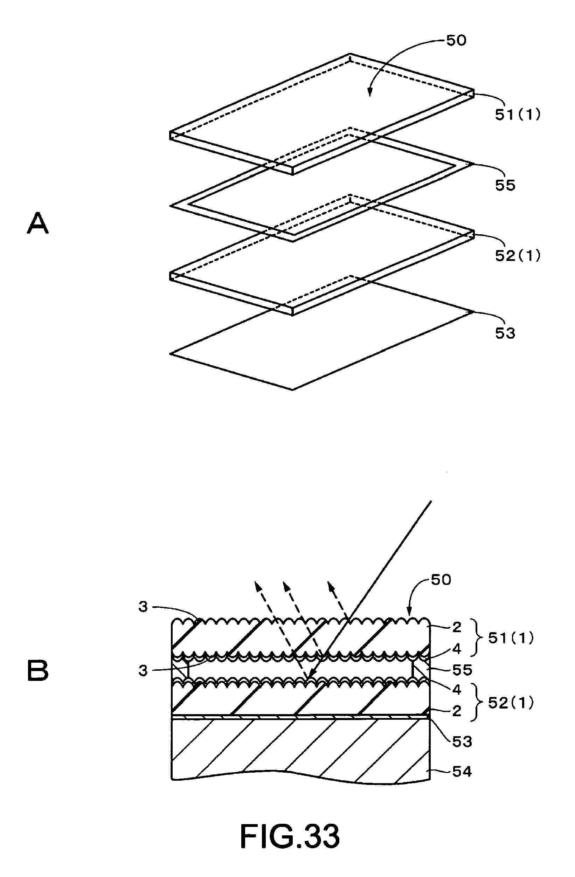

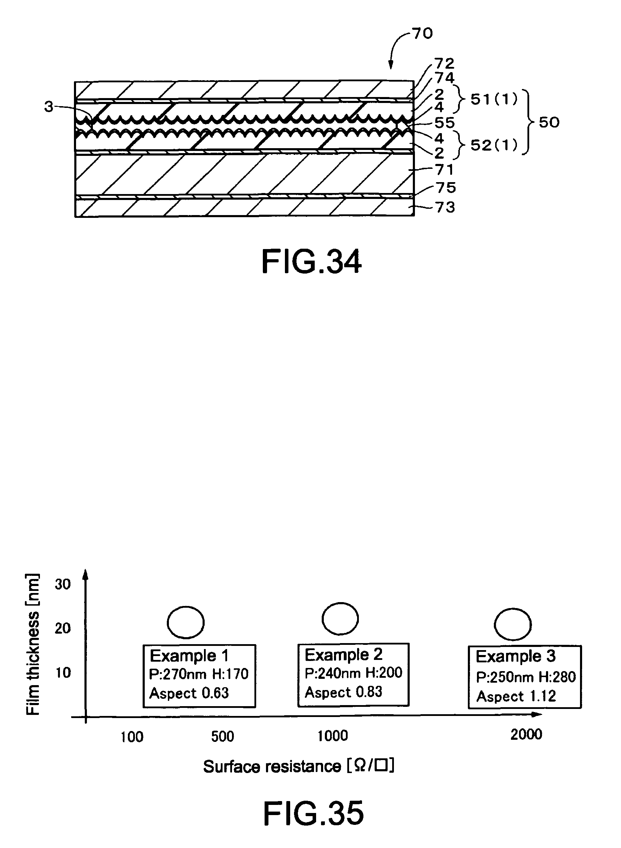

1. First Embodiment (example in which structures are two-dimensionally arrayed in straight and in a hexagonal lattice manner: see Figs. 1)
2. Second Embodiment (example in which structures are two-dimensionally arrayed in straight and in a rectangular lattice manner: see Figs. 15)
3. Third Embodiment (example in which structures are two-dimensionally arrayed in an arc manner and in a hexagonal lattice manner: see Figs. 18)
4. Fourth Embodiment (example in which structures are meandered and arrayed: see Figs. 21)
5. Fifth Embodiment (example in which concave-shaped structures are formed on substrate surface: see Figs. 22)
6. Sixth Embodiment (example in which refractive index profile has S shape: see Figs. 24)
7. Seventh Embodiment (example in which structures having transparent conductivity are arrayed: see Fig. 29)
8. Eighth Embodiment (example in which structures are formed on both main surfaces of conductive optical element: see Fig. 30)
9. Ninth Embodiment (application example to touch panel: see Fig. 31A and Fig. 31B)
10. Tenth Embodiment (example in which structures are formed on touch surface of touch panel: see Fig. 33A and Fig. 33B)
11. Eleventh Embodiment (example of inner touch panel: see Fig. 34)

<1. First Embodiment>

[Structure of conductive optical element]

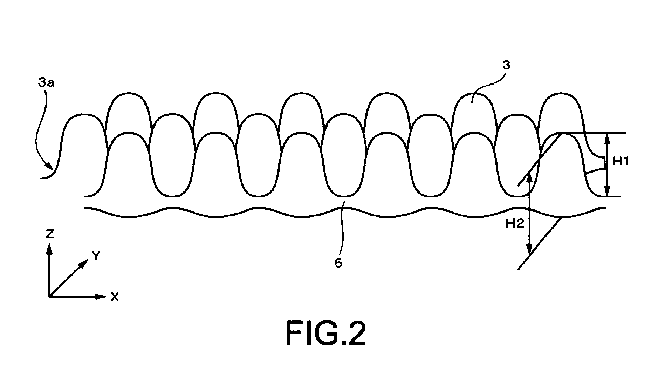

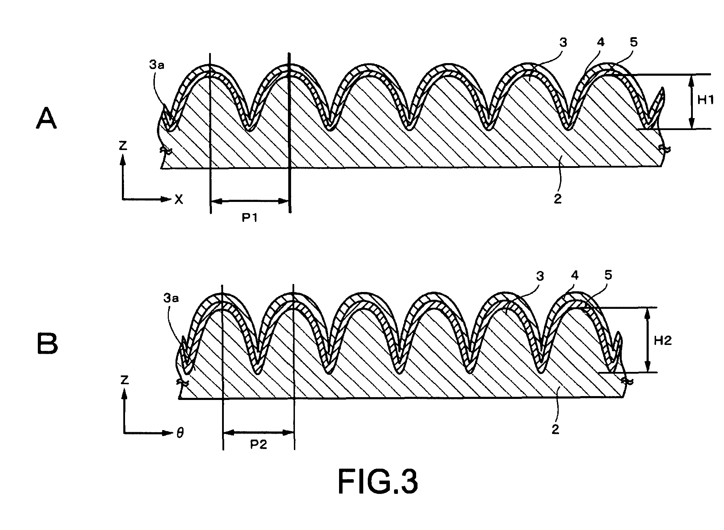

Fig. 1A is a schematic plan view showing one example of a structure of a conductive optical element according to a first embodiment of the present invention. Fig. 1B is a plan view showing the conductive optical element shown in Fig. 1A by enlarging part thereof. Fig. 1C is a sectional view of tracks T1, T3, ... of Fig. 1B. Fig. 1D is a sectional view of tracks T2, T4, ... of Fig. 1B. Fig. 1E is an abbreviated line diagram showing a modulated waveform of a laser light used to form a latent image corresponding to the tracks T1, T3, ... of Fig. 1B. Fig. 1F is an abbreviated line diagram showing a modulated waveform of a laser light used to form a latent image corresponding to the tracks T2, T4, ... of Fig. 1B. Fig. 2 and Fig. 4-Fig. 6 are perspective views showing a conductive optical element 1 shown in Fig. 1A by enlarging part thereof. Fig. 3A is a sectional view of the conductive optical element shown in Fig. 1A in an extending direction of the tracks (X direction (hereinafter, also referred to as track direction, as appropriate)). Fig. 3B is a sectional view of the conductive optical element shown in Fig. 1A in a θ direction.

The conductive optical element 1 is a conductive optical element having transparency, and is preferable to application to a touch panel or the like. The conductive optical element 1 includes a substrate 2 having both opposite main surfaces, a plurality of structures 3 being convex portions arranged on one main surface at fine pitches equal to or smaller than a wavelength of a light in order to reduce reflection, and a transparent conductive film 4 formed on those structures 3. The transparent conductive film 4 has a shape modeled on a concave-convex surface of the substrate 2 on which the structures 3 are formed. Further, from a viewpoint of reducing surface resistances, it is preferable that a metal film 5 formed on the structures 3 be further provided. The conductive optical element 1 has a function preventing a light passing through the substrate 2 in -Z direction of Fig. 2 from reflecting from an interface between the structured 3 and the air therearound.

The aspect ratio (height H/average arrangement pitch P) of the structures 3 is in a range of preferably 0.2 or more and 1.78 or less, more preferably 0.2 or more and 1.28 or less, further preferably 0.63 or more and 1.28 or less. The film thickness of the transparent conductive film 4 is preferably in a range of 9 nm or more and 50 nm or less. In a case where the aspect ratio of the structures 3 is less than 0.2 and the film thickness of the transparent conductive film 4 exceeds 50 nm, concave portions between the structures are filled with the transparent conductive film 4, and there is a tendency that the antireflection property and the transmission property decrease. Meanwhile, in a case where the aspect ratio of the structures 3 exceeds 1.78 and the film thickness of the transparent conductive film 4 is less than 9 nm, inclined surfaces of the structures 3 become steep, and the film thickness of the transparent conductive film 4 become smaller, whereby there is a tendency that the surface resistance increases. That is, in a case where the aspect ratio and the film thickness satisfy the above-mentioned numerical ranges, a wide range of surface resistance (for example, 100 Ω/ or more and 5000 Ω/ or less) can be achieved, and an excellent antireflection property and transmission property can be achieved.

In a case where the film thickness of the transparent conductive film 4 at the top portions of the structures 3 is D1, the film thickness of the transparent conductive film 4 at the inclined surfaces of the structures 3 is D2, and the film thickness of the transparent conductive film 4 between the structures is D3, a relation D1>D3>D2 is preferably satisfied. The film thickness D2 at the inclined surfaces of the structures 3 is preferably in a range of 9 nm or more and 30 nm or less. In a case where the film thicknesses D1, D2, D3 of the transparent conductive film 4 satisfy the above-mentioned relations and the film thickness D2 of the transparent conductive film 4 satisfies the above-mentioned numerical range, a wide range of surface resistance can be achieved, and an excellent antireflection property and transmission property can be achieved.

From a viewpoint of being able to achieve a wide range of surface resistance and achieving an excellent antireflection property and transmission property, it is preferable that the film thickness D1 at the top portions of the structures 3 be in a range of 25 nm or more and 50 nm or less, the film thickness D2 at the inclined surfaces of the structures 3 be in a range of 9 nm or more and 30 nm or less, and the film thickness D3 between the structures be in a range of 9 nm or more and 50 nm or less.

In a case of using the conductive optical element 1 according to the first embodiment as an upper electrode or a lower electrode of a digital touch panel, the surface resistance of the conductive optical element 1 is preferably in a range of 500 $\Omega$/ or less. In order to satisfy the surface resistance range and achieve an excellent transmission property, it is preferable that the aspect ratio of the structures 3 be in a range of 0.2 or more and 1.28 or less, and the film thickness of the transparent conductive film 4 be in a range of 9 nm or more and 50 nm or less. The height H of the structure 3 is preferably in a range of 100 nm or more and 320 nm or less. The average arrangement pitch P of the structures 3 is preferably in a range of 180 nm or more and 350 nm or less.

In a case where the conductive optical element according to the first embodiment is used as an upper electrode or a lower electrode of an analog touch panel, the surface resistance of the conductive optical element 1 is preferably in a range of 200 $\Omega$/ or more and 1000 $\Omega$/ or less. In order to satisfy the surface resistance range and achieve an excellent transmission property, it is preferable that the aspect ratio of the structures 3 be in a range of 0.2 or more and 1.28 or less, and the film thickness of the transparent conductive film 4 be in a range of 9 nm or more and 50 nm or less. The height H of the structure 3 is preferably in a range of 100 nm or more and 320 nm or less. The average arrangement pitch P of the structures 3 is preferably in a range of 180 nm or more and 350 nm or less.

In a case where the conductive optical element according to the first embodiment is used as an upper electrode or a lower electrode of an electrostatic touch panel, the surface resistance of the conductive optical element 1 is preferably in a range of 250 $\Omega$/ or more and 3000 $\Omega$/ or less. In order to satisfy the surface resistance range and achieve an excellent transmission property, it is preferable that the aspect ratio of the structures 3 be in a range of 0.2 or more and 1.28 or less, and the film thickness of the transparent conductive film 4 be in a range of 9 nm or more and 50 nm or less. The height H of the structure 3 is preferably in a range of 100 nm or more and 320 nm or less. The average arrangement pitch P of the structures 3 is preferably in a range of 180 nm or more and 350 nm or less.

The surface resistance of the transparent conductive film 4 is preferably in a range of 100 $\Omega$/ or more and 5000 $\Omega$/ or less. This is because, with the surface resistance of this range, the transparent conductive optical element 1 can be used as an upper electrode or a lower electrode of each of various types of touch panels.

Hereinafter, the substrate 2, the structures 3, the transparent conductive film 4, and the metal film 5 structuring the conductive optical element 1 will be described in this order.

(Substrate)

The substrate 2 is, for example, a transparent substrate having transparency. A material of the substrate 2 is, for example, one mainly containing plastic materials or glasses having transparency, but is not specifically limited to those materials.

As glasses, for example, soda-lime glass, lead glass, hard glass, quartz glass, liquid crystal glass, and the like (see "Kagaku Binran (Handbook of Chemistry)", Pure Chemistry, P. I-537, edited by The Chemical Society of Japan) are used. As plastic materials, from a viewpoint of various properties such as optical properties such as transparency, refractive index, and dispersion, moreover, impact resistance, heat resistance, and durability, preferable are (meta) acrylic resin such as a copolymer of polymethyl methacrylate or methyl methacrylate and vinyl monomer such as other alkyl(meta)acrylate or styrene; polycarbonate-series resin such as polycarbonate or diethylene glycol bisallyl carbonate (CR-39); and thermosetting (meta)acrylic resin such as homopolymer or copolymer of (brominated)bisphenol A-type di (meta)acrylate, or polymer and copolymer of urethane modified monomer of (brominated) bisphenol A mono(meta) acrylate; polyester, specifically, polyethylene terephthalate, polyethylene naphthalate, and unsaturated polyester, acrylonitrile-styrenecopolymer, polyvinyl chloride, polyurethane, epoxy resin, polyarylate, polyether sulfone, polyether ketone, cycloolefin polymer (product names: ARTON, ZEONOR), and the like. Further, aramid-series resin may be used in view of heat resistance.

In a case where a plastic material is used as the substrate 2, in order to further improve a surface energy, a coating property, a sliding property, flatness, and the like of a plastic surface, a basecoat layer may be provided as surface treatment. As the basecoat layer, for example, organoalkoxymetal compound, polyester, acrylic modified polyester, polyurethane, or the like may be used. Further, in order to achieve an effect similar to provision of a basecoat layer, corona discharge or UV irradiation processing may be performed on the surface of the substrate 2.

In a case where the substrate 2 is a plastic film, the substrate 2 can be obtained by a method of, for example, spreading the above-mentioned resin, forming a film in a film form after diluting it with solvent and drying it, or the like. Further, the thickness of the substrate 2 is, for example, about 25 pm-500 $\mu$m.

As the shape of the substrate 2, for example, a sheet shape, a plate shape, or a block shape can be employed, but it is not limited to those shapes, specifically. Here, it is defined that the sheet includes a film.

(Structures)

On the surface of the substrate 2, a number of structures 3 being convex portions are arrayed. The structures 3 are periodically and two-dimensionally arrayed at small arrangement pitches equal to or less than a wavelength band of a light targeting reduction of reflection, for example, arrangement pitches similar to the wavelength of a visible light. Here, the arrangement pitch means the average arrangement pitch P. The wavelength band of a light targeting reduction of reflection is, for example, the wavelength band of an ultraviolet light, the wavelength band of a visible light, or the wavelength band of an infrared light. Here, the wavelength band of an ultraviolet light is the wavelength band of 10 nm-360 nm, the wavelength band of a visible light is the wavelength band of 360 nm-830 nm, and the wavelength band of an infrared light is the wavelength band of 830 nm-1 mm. Specifically, the average arrangement pitch of the structures 3 is in a range of preferably 180 nm or more and 350 nm or less, more preferably 100 nm or more and 320 nm or less, and further preferably 110 nm or more and 280 nm or less. When the arrangement pitch is less than 180 nm, there is a tendency that manufacture of the structures 3 is difficult. Meanwhile, when the arrangement pitch exceeds 350 nm, there is a tendency that a diffraction of a visible light may generate.

The respective structures 3 of the conductive optical element 1 have an arrangement mode structuring a plurality of rows of tracks T1, T2, T3,... (hereinafter, also collectively referred to as "track T".) on the surface of the substrate 2. In the present invention, the track indicates a portion in which the structures 3 queue up and form a continuous straight line. Further, the row direction indicates a direction) orthogonal to an extending direction (X direction) of the tracks on a molding surface of the substrate 2.

The structures 3 are arranged at positions in a staggered configuration by half a pitch between the two adjacent tracks T. Specifically, between the two adjacent tracks T, at middle positions of the structures 3 arranged in one track (for example T1) (staggered position by half a pitch), the structures 3 of the other track (for example T2) are arranged. As a result, as shown in Fig. 1B, the structures 3 are arranged such that, in the three rows of adjacent tracks (T1-T3), a hexagonal-lattice pattern or a quasi-hexagonal-lattice pattern in which the centers of the structures 3 are located on the respective points a1-a7 are formed. In this embodiment, the hexagonal-lattice pattern indicates a lattice pattern having a regular hexagon. Further, the quasi-hexagonal-lattice pattern is different from a lattice pattern having a regular hexagon, and indicates a distorted hexagonal-lattice pattern by enlarging it in the track extending direction (X-axis direction).

In a case where the structures 3 are arranged to form a quasi-hexagonal-lattice pattern, as shown in Fig. 1B, the arrangement pitch P1 (distance between a1-a2) of the structures 3 in one track (for example, T1) is preferably longer than the arrangement pitch of the structures 3 between the two adjacent tracks (for example, T1 and T2), that is, the arrangement pitch P2 (for example, distances between a1-a7, a2-a7) of the structures 3 in the $\pm\theta$ directions with respect to the extending direction of the tracks. By arranging the structures 3 as described above, further improvement of a filling density of the structures 3 can be attained.

From a viewpoint of easy formation, the structure 3 preferably has a cone shape, or a cone shape obtained by enlarging or reducing a cone shape in the track direction. The structure 3 preferably has an axisymmetric cone shape, or a cone shape obtained by enlarging or reducing a cone shape in the track direction. In a case where the adjacent structures 3 are joined, except for the lower portion joined to the adjacent structures 3, the structure 3 preferably has an axisymmetric cone shape, or a cone shape obtained by enlarging or reducing a cone shape in the track direction. As the cone shape, for example, a cone shape, a truncated-cone shape, an elliptic-cone shape, an elliptic-truncated-cone shape, or the like may be employed. Here, the cone shape conceptually includes, as described above, other than a cone shape and a truncated-cone shape, an elliptic-cone shape and an elliptic-truncated-cone shape. Further, the truncated-cone shape indicates a shape obtained by truncating the top portion of a cone shape, and the elliptic-truncated-cone shape indicates a shape obtained by truncating the top portion of an elliptic cone.

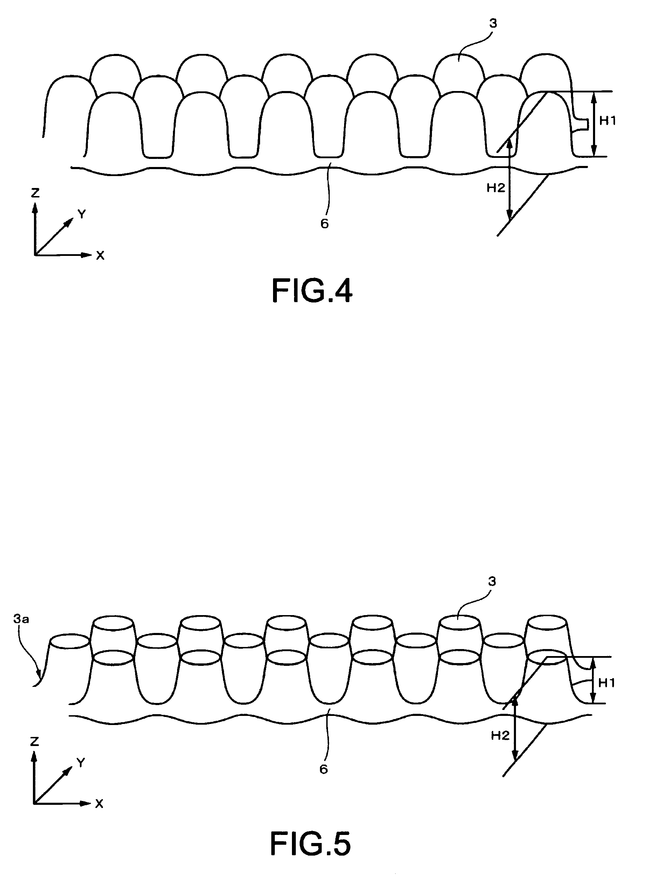

The structure 3 preferably has a cone shape having a bottom surface having a width in the extending direction of the tracks larger than a width in the row direction orthogonal to the extending direction. Specifically, as shown in Fig. 2 and Fig. 4, the structure 3 preferably has a cone structure having a bottom surface having an elliptic shape, an oval shape, or an egg shape having a long axis and a minor axis, and has an elliptic-cone shape having the top portion having a curved surface. Further, as shown in Fig. 5, it preferably has a cone structure having an elliptic shape, an oval shape, or an egg shape having a bottom surface having a long axis and a minor axis, and has an elliptic-truncated-cone shape having a flat top portion. This is because such a shape can improve the filling rate in the row direction.

From a viewpoint of improving a reflection property, a cone shape having a top portion having a slight inclination and an inclination gradually steep from the center portion to the bottom portion (see Fig. 4) is preferable. Further, from a viewpoint of improving a reflection property and a transmission property, a cone shape in which the inclination of the center portion is steeper than those of the bottom portion and the top portion (see Fig. 2), or a cone shape having a flat top portion (see Fig. 5) is preferable. In a case where the structure 3 has an elliptic-cone shape or an elliptic-truncated-cone shape, the long-axis direction of the bottom surface is preferably in parallel with the extending direction of the tracks. In Fig. 2 and the like, the structures 3 have the same shape, but the shape of the structures 3 is not limited to this, and the structures 3 having two or more kinds of shapes may be formed on the substrate surface. Further, the structures 3 may be integrally formed with the substrate 2.

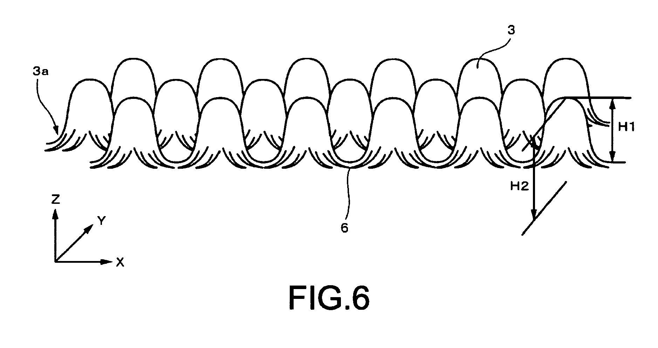

Further, as shown in Fig. 2 and Fig. 4-Fig. 6, projecting portions 6 are preferably provided on part or all of the peripheries of the structures 3. This is because, in this manner, even if the filling rate of the structures 3 is low, the reflection coefficient can be suppressed low. In particular, for example, as shown in Fig. 2, Fig. 4, and Fig. 5, the projecting portions 6 are provided between the adjacent structures 3. Further, as shown in Fig. 6, the slim projecting portions 6 may be provided on all or part or the peripheries of the structures 3. The slim projecting portions 6 extend, for example, in a direction from the top portions of the structures 3 to the lower portion. The shape of the projecting portion 6 may be a triangular shape in cross section, a rectangular shape in cross section, or the like, but it is not limited to those shapes specifically, and it can be selected in view of easy formation. Further, part or all of the surfaces of the peripheries of the structures 3 may be made uneven, and fine asperities may be formed. In particular, for example, the surfaces between the adjacent structures 3 may be made uneven, and fine asperities may be formed. Further, on the surfaces of the structures 3, for example, on the top portions, fine holes may be formed.

The height H1 of the structure 3 in the extending direction of the tracks is preferably smaller than the height H2 of the structure 3 in the row direction. That is, the heights H1, H2 of the structures 3 preferably satisfy a relation H1<H2 This is because, if the structures 3 are arranged so as to satisfy a relation H1≥H2, the arrangement pitch P1 in the extending direction of the tracks should be longer, and therefore the filling rate of the structures 3 in the extending direction of the tracks decreases. When the filling rate decreases as described above, the reflection property may decrease.

Note that, all the aspect ratios of the structures 3 may not always be the same, but they may be structured such that the respective structures 3 have a constant height distribution (for example, about range of aspect ratio 0.2-1.78). By providing the structures 3 having the height distribution, a wavelength dependence of a reflection property can be reduced. Therefore, the conductive optical element 1 having an excellent antireflection property can be attained.

Here, the height distribution means that the structures 3 having two or more kinds of heights (depths) are provided on the surface of the substrate 2. That is, it means that the structures 3 having a height being a reference and the structures 3 having a height different from that of those structures 3 are provided on the surface of the substrate 2. The structures 3 having a height different from the reference are provided, for example, periodically or nonperiodically (randomly) on the surface of the substrate 2. The direction of the periodicity is, for example, the extending direction of the tracks, the row direction, or the like.

Hem portions 3a are preferably provided on the peripheral portions of the structures 3. This is because, in the manufacturing process of the conductive optical element, the structures 3 can be easily peeled off from a mold or the like. Here, the hem portion 3a means a projecting portion provided on the peripheral portion of the bottom portion of the structure 3. From a viewpoint of the above-mentioned peeling property, the hem portion 3a preferably has a curved surface having a height gradually decreasing in a direction from the top portion of the structure 3 to the lower portion. Note that the hem portions 3a may be provided on only part of the peripheral portions of the structures 3, but, from a viewpoint of improving the above-mentioned peeling property, is preferably provided on all the peripheral portions of the structures 3. Further, in a case where the structures 3 are concave portions, the hem portions are curved surfaces provided on peripheries of openings of the concave portions being the structures 3.

The heights (depths) of the structures 3 is set in a range of preferably 70 nm or more and 320 nm or less, more preferably 70 nm or more and 320 nm or less, and further preferably 110 nm or more and 280 nm or less. In a case where the height of the structure 3 is less than 70 nm, there is a tendency that a reflection coefficient increases. In a case where the height of the structure 3 exceeds 320 nm, there is a tendency that it is difficult to attain a predetermined resistance.

Note that, in the present invention, the aspect ratio is defined by the following Expression (1).

$$\text{Aspect ratio} = H/P... \quad (1)$$

Where H: height of structure, P: average arrangement pitch (average period)

Here, the average arrangement pitch P is defined by the following Expression (2).

$$\texttt{Average arrangement pitch P = (P1+P2+P2)/3 ... (2)}$$

Where P1: arrangement pitch in extending direction of tracks (track-extending direction period), P2: arrangement pitch in $\pm\theta$ directions to extending direction of tracks (note that $\theta=60°-\delta$, here, $\delta$ is preferably $0°<\delta<11°$, more preferably $3°\leq\delta\leq6°$) ($\theta$ direction period)

In a case where the structures 3 are arranged so as to form a hexagonal-lattice pattern or a quasi-hexagonal-lattice pattern, it is assumed that the height H of the structure 3 is the height of the structure 3 in the row direction. Because the height of the structure 3 in the track-extending direction (X direction) is smaller than the height in the row direction (Y direction), and further, the height of the portion other than those of the structures 3 in the track-extending direction is approximately the same as the height in the row direction, the height of a sub-wavelength structure is represented by the height in the row direction. Note that, in a case where the structures 3 are concave portions, it is assumed that the height H of the structure in the above-mentioned Expression (1) is the depth H of the structure.

When it is assumed that the arrangement pitch of the structures 3 in the same track is P1, and the arrangement pitch of the structures 3 between the two adjacent tracks is P2, the ratio P1/P2 satisfies a relation of preferably $1.00\leq P1/P2\leq1.2$ or $1.00<P1/P2<1.2$, and more preferably $1.00\leq P1/P2\leq1.1$ or $1.00<P1/P2\leq1.1$. According to such numerical ranges, the filling rate of the structures 3 having an elliptic-cone or an elliptic-truncated-cone shape can be improved, whereby an antireflection property can be improved.

The filling rate of the structures 3 on the substrate surface is in a range of 65% or more, preferably 73% or more, and more preferably 86% or more where the upper limit is 100%. When the filling rate is in such ranges, an antireflection property can be improved. In order to improve a filling rate, by joining the lower portions of the adjacent structures 3, adjusting an ellipticity of the structure bottom surfaces, or the like, distortion is preferably added to the structures 3.

Here, the filling rate (average filling rate) of the structures 3 has a value obtained as follows.
First, a picture of the surface of the conductive optical element 1 is taken in a Top View by using a scanning electron microscope (SEM: Scanning Electron Microscope). Next, a unit lattice Uc is randomly selected from a taken SEM photograph, and the arrangement pitch P1 and the track pitch Tp of the unit lattice Uc are measured (see Fig. 1B). Further, the area S of the bottom surface of the structure 3 located in the middle of the unit lattice Uc is measured by image processing. Next, by using the measured arrangement pitch P1, track pitch Tp, and area S of the bottom surface, the filling rate is obtained based on the following Expression (3).

$$\texttt{Filling rate = (S(hex.)/S(unit))x100 ... (3)}$$

Unit lattice area: S(unit) = P1x2Tp
Areas of bottom surfaces of structures in unit lattice: S(hex.) = 2S

The above-mentioned filling rate calculation processing is performed for ten unit lattices randomly selected from the taken SEM photograph. Further, measured values are simply averaged (arithmetic average) to thereby obtain the average rate of the filling rate as a filling rate of the structures 3 of the substrate surface.

With regard to a filling rate when the structures 3 are overlapped with each other or when there are substructures such as the projecting portions 6 between the structures 3, the filling rate can be obtained by a method of judging an area ratio where a portion corresponding to the 5% height with respect to the height of the structure 3 is a threshold .

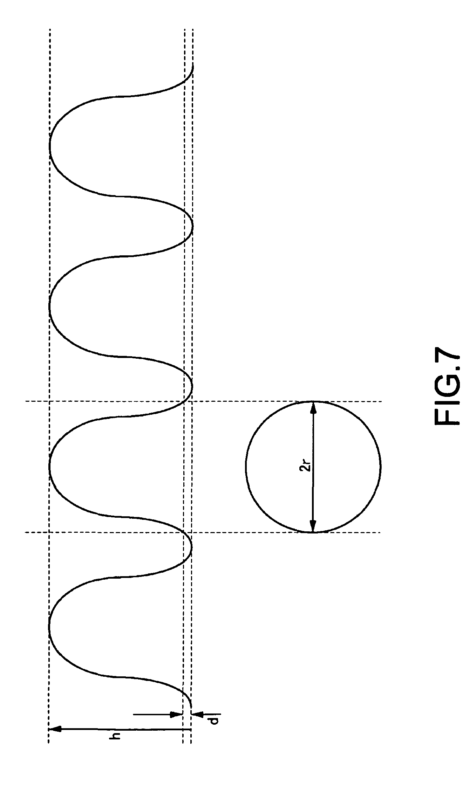

Fig. 7 is a diagram for explaining a filling-rate calculation method in a case where boundaries of the structures 3 are unclear. In a case where the boundaries of the structures 3 are unclear, by a cross-section SEM observation, as shown in Fig. 7, where a portion corresponding to 5% (=(d/h)x100) of the height H of the structure 3 is a threshold, the height d is converted to the diameter of the structures 3 to thereby obtain the filling rate. In a case where the bottom surface of the structure 3 is an ellipse, the same processing is performed on a long axis and a minor axis.

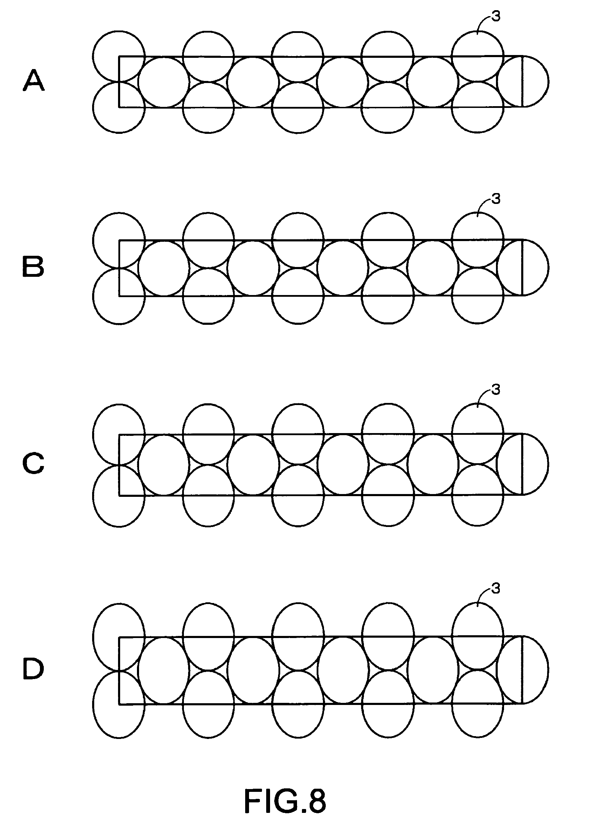

Figs. 8 are diagrams showing bottom surface shapes when an ellipticity of the bottom surface of the structure 3 is changed. Ellipticities of ellipses shown in Fig. 8A-Fig. 8D are 100%, 110%, 120%, and 141%, respectively. By changing ellipticities in this manner, the filling rate of the structures 3 on the substrate surface can be changed. In a case where the structures 3 form a quasi-hexagonal-lattice pattern, the ellipticity e of the structure bottom surface is preferably 100%<e<150% or less. This is because, according to this range, the filling rate of the structures 3 can be improved, and an excellent antireflection property can be achieved.

Here, where the diameter of the structure bottom surface in the track direction (X direction) is a and the diameter in the row direction (Y direction) orthogonal thereto is b, the ellipticity e is defined by (a/b)x100. Note that the diameters a, b of the structure 3 are values obtained as follows. A picture of the surface of the conductive optical element 1 is taken in a Top View by using a scanning electron microscope (SEM: Scanning Electron Microscope), and ten structures 3 are randomly extracted from the taken SEM photograph. Next, the diameters a, b of the bottom surfaces of the respective extracted structures 3 are measured. Further, the respective measured values a, b are simply averaged (arithmetic average) to thereby obtain average values of the diameters a, b, and they are assumed as the diameters a, b of the structure 3.

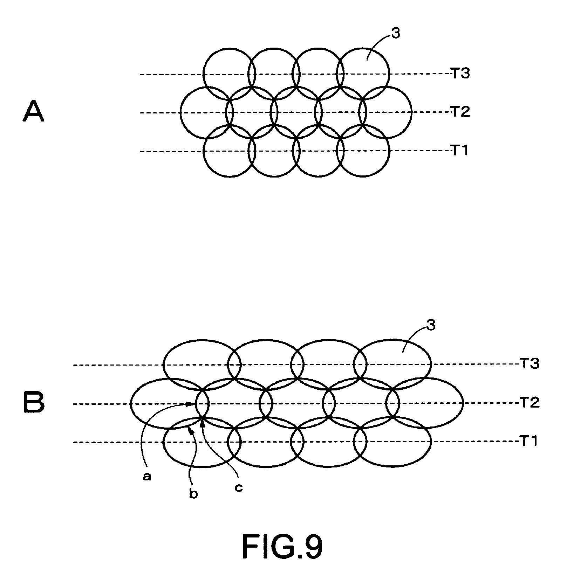

Fig. 9A shows one example of an arrangement of the structures 3 having cone shapes or truncated-cone shapes. Fig. 9B shows one example of an arrangement of the structures 3 having elliptic-cone shapes or elliptic-truncated-cone shapes. As shown in Fig. 9A and Fig. 9B, the structures 3 are preferably joined such that their lower portions are overlapped with each other. Specifically, the lower portions of the structures 3 are preferably joined with the lower portions of part or all of the adjacent structures 3. More specifically, in the track direction, in the θ direction, or in the both directions, the lower portions of the structures 3 are preferably joined with each other. More specifically, in the track direction, in the θ direction, or in the both directions, the lower portions of the structures 3 are preferably joined with each other. Fig. 9A and Fig. 9B show examples in which all the lower portions of the adjacent structures 3 are joined. By joining the structures 3 in this manner, the filling rate of the structures 3 can be improved. The structures are preferably joined at portions 1/4 or less of the maximum value of the wavelength band of a light under a usage environment in a light path length in view of a refractive index. As a result, an excellent antireflection property can be achieved.

As shown in Fig. 9B, the lower portions of the adjacent structures 3 in the same track are overlapped with each other and first joined portions a are formed, and the lower portions of the adjacent structures 3 in the adjacent tracks are overlapped with each other and second joined portions 2 are formed. On the intersections of the first joined portions a and the second joined portions b, intersection portions c are formed. The positions of the intersection portions c are, for example, lower than the positions of the first joined portions a and the second joined portions b. In a case where the lower portions of the structures 3 having elliptic-cone shapes or elliptic-truncated-cone shapes are joined, for example, the heights decrease in the order of the joined portions a, the joined portions b, and the intersection portions c.

The ratio of the diameter 2r to the arrangement pitch P1 ((2r/P1)x100) is 85% or more, preferably 90% or more, and more preferably 95% or more. This is because, with those ranges, the filling rate of the structures 3 can be improved, and an antireflection property can be improved. When the ratio ((2r/P1)x100) becomes large and overlaps of the structures 3 become too large, there is a tendency that an antireflection property decreases. Therefore, to join the structures at portions 1/4 or less of the maximum value of the wavelength band of a light under a usage environment in a light path length in view of a refractive index, the upper limit value of the ratio ((2r/P1)x100) is preferably set. Here, the arrangement pitch P1 is an arrangement pitch of the structures 3 in the track direction, and the diameter 2r is a diameter of the structure bottom surface in the track direction. Note that, in a case where the structure bottom surface has a circular shape, the diameter 2r is a diameter, and, in a case where the structure bottom surface has an elliptic shape, the diameter 2r is a long diameter.

(Transparent conductive film)

As materials structuring the transparent conductive film 4, for example, indium tin oxide (ITO), zinc oxide (ZnO), AZO ($Al_2O_3$, ZnO), SZO, FTO, $SnO_2$ GZO, IZO ($In_2O_3$, ZnO), and the like are employed, and from a viewpoint of a high reliability, a low resistivity, and the like, ITO is preferable. It is preferable that the transparent conductive film 4 is formed modeled on the surface shape of the structures 3 so as not to inhibit an antireflection effect of the structures 3, and that the surface shapes of the structures 3 and the transparent conductive film 4 have approximately similar shapes. This is because a change of a refractive index profile owing to formation of the transparent conductive film 4 can be inhibited, and an excellent antireflection property and/or a transmission property can be maintained. A material structuring the transparent conductive film 4 is preferably in a mixed state of amorphous and polycrystalline. This is because, also in a case where the height of the structure 3 is small, the transparent conductive film 4 having a film thickness not inhibiting an antireflection effect of the structures 3 can be formed. That is, this is because the transparent conductive film 4 can maintain a shape modeled on the shapes of the structures 3.

The film thickness of the transparent conductive film 4 is preferably in a range of 9 nm or more and 50 nm or less. In this description, the film thickness of the transparent conductive film 4 is the average film thickness of the transparent conductive film thickness 4 at the top portions of the structures 3. Specifically, the film thickness of the transparent conductive film 4 is obtained as follows. First, the conductive optical element 1 is cut so as to include the top portions of the structures 3, a picture of its cross-section is taken by a transmission electron microscope (TEM: Transmission Electron Microscope), and the film thickness of the transparent conductive film 4 at the top portions of the structures 3 is measured from the taken TEM photograph. The measurements are repeatedly performed for ten positions randomly-selected from the conductive optical element 1, the measured values are simply averaged (arithmetic average) to obtain the average film thickness, and the average film thickness is assumed as the film thickness of the transparent conductive film 4.

(Metal film)

The metal film 5 is preferably further provided on the structures 3. This is because a resistivity can decrease, the transparent conductive film 4 can be made thinner, or, in a case where conductivity does not reach an enough value only with the transparent conductive film 4, conductivity can be compensated. The metal film 5 is formed on, for example, the interface between the structures 3 and the transparent conductive film 4, the surface of the transparent conductive film 4, and both of them. Further, a lamination structure in which the transparent conductive films 4 are laminated via the metal films 4 may be employed. The film thickness of the metal film 5 is not specifically limited, but, for example, about several nm is selected. Because the metal film 5 is high in conductivity, an enough surface resistance can be achieved with the film thickness of several nm. Further, about several nm leads to few optical effects such as absorption and reflection by the metal film 5. As a material structuring the metal film 5, a metal-series material having a high conductivity is preferably used. As such a material, for example, at least one kind selected from a group consisting of Ag, Al, Cu, Ti, Au, Pt, and Nb can be employed. Of those materials, in view of high conductivity, use experience, and the like, Ag is preferable. In a case where the metal film 5 can secure a surface resistance by itself but is extremely thin, the metal film 5 has an island structure, and it is difficult to secure conductivity. In this case, also in order to electrically connecting the metal film 5 on the island, formation of the transparent conductive film 4 on the upper layer of the metal film 5 is important. As specific examples of the transparent conductive film 4 and the metal film 5 laminated on the structures, for example, an ITO film/Ag film, and an ITO film/Ag film/ITO film are employed.

[Structure of roll master]

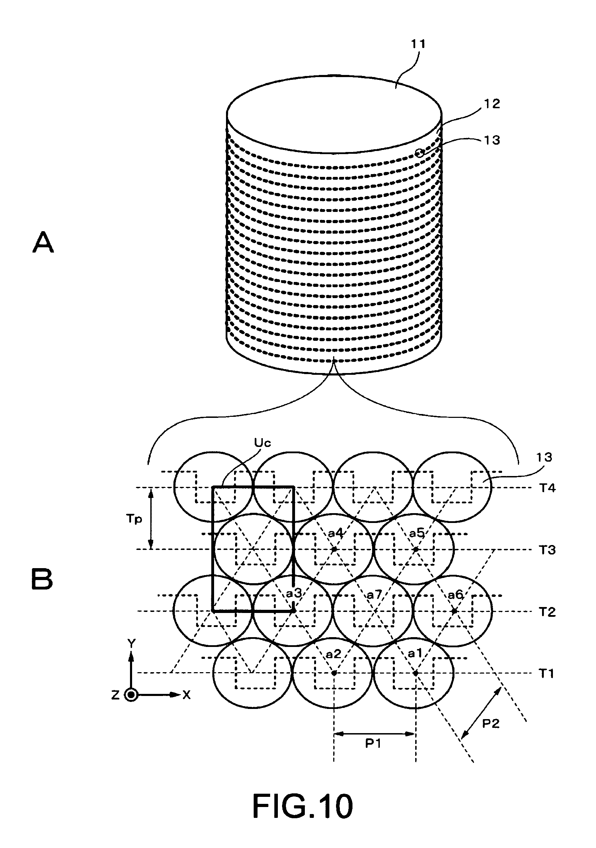

Figs. 10 show one example of a structure of a roll master for manufacturing a conductive optical element having the above-mentioned structure. As shown in Figs. 10, a roll master 11 has a structure in which, for example, a number of structures 13 being concave portions are arranged on the surface of a master 12 at pitches similar to the wavelength of a light such as a visible light. The master 12 has a columnar or cylindrical shape. As a material of the master 12, for example, glass can be used, but it is not specifically limited to this material. A roll-master exposure apparatus described later is used, a two-dimensional pattern is spatially linked, a polarity-reversion formatter signal and a rotation controller of a recording apparatus are synchronized for one track to generate a signal, and patterning is performed at CAV and at an appropriate feeding pitch. As a result, a hexagonal-lattice pattern or a quasi-hexagonal-lattice pattern can be recorded. By appropriately setting the frequency of the polarity-reversion formatter signal and the rpm of the roll, a lattice pattern having a constant spatial frequency can be formed on a desired recording area.

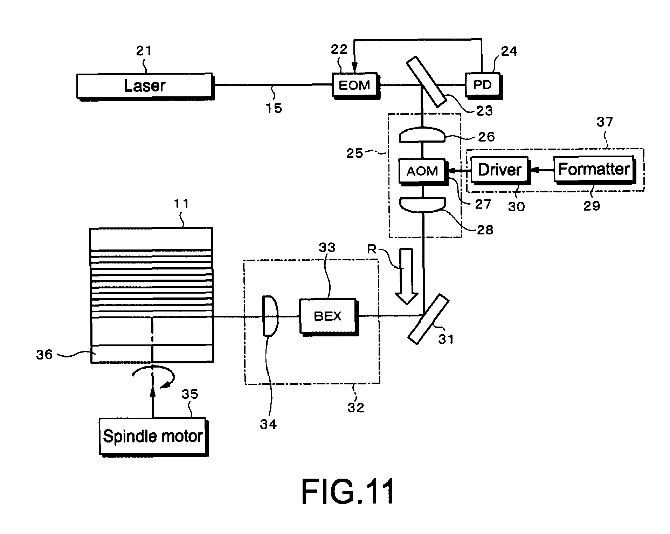

[Manufacturing method of conductive optical element]
Next, with reference to Fig. 11-Figs. 14, the manufacturing method of the conductive optical element 1 structured as described above will be described.

The manufacturing method of a conductive optical element according to the first embodiment includes a resist film formation step of forming a resist layer on a master, an exposure step of forming a moth-eye-pattern latent image on the resist film by using a roll-master exposure apparatus, and a development step of developing the resist layer on which the latent image is formed. Further, an etching step of manufacturing a roll master by using a plasma etching, a replication step of manufacturing a replica substrate with an ultraviolet curable resin, and a film-formation step of performing film formation of a transparent conductive film on the replica substrate are included.

(Structure of exposure apparatus)

First, with reference to Fig. 11, the structure of the roll-master exposure apparatus used in the exposure step of the moth-eye pattern will be described. The roll-master exposure apparatus is structured based on an optical-disc recording apparatus.

A laser light source 21 is a light source for exposing the resist film formed on the surface of the master 12 being a recording medium to light, and oscillates a laser light 15 for recording having a wavelength $\lambda=266$ nm, for example. The laser light 15 output from the laser light source 21 being a parallel beam travels in a straight line, and enters an electro optical modulator (EOM: Electro Optical Modulator) 22. The laser light 15 passing through the electro optical modulator 22 is reflected by the mirror 23, and guided to a modulation optical system 25.

The mirror 23 is structured by a polarizing beam splitter, and has a function of reflecting one polarization component and allowing the other polarization component to pass through. The polarization component passing the mirror 23 is received by a photo diode 24, and, based on the received signal, the electro optical modulator 22 is controlled and phase modulation of the laser light 15 is performed.

In the modulation optical system 25, the laser light 15 is condensed on an acoust-optic modulator (AOM: Acoust-Optic Modulator) 27 made of a glass ($SiO_2$) or the like by a condenser lens 26. The laser light 15 becomes a parallel beam by a lens 28 after being intensity-modulated by the acoust-optic modulator 27 and being dispersed. The laser light 15 output from the modulation optical system 25 is reflected by a mirror 31, and guided in horizontal and in parallel on a moving optical table 32.

The moving optical table 32 includes a beam expander 33 and an objective lens 34. The laser light 15 guided to the moving optical table 32 is shaped to a desired beam shape by the beam expander 33, and after that, irradiated on a resist layer on the master 12 via the objective lens 34. The master 12 is mounted on a turntable 36 connected to a spindle motor 35. Further, while rotating the master 12 and moving the laser light 15 in the height direction of the master 12, the resist layer is intermittently irradiated with the laser light 15, whereby the exposure step of the resist layer is performed. The formed latent image has an approximately elliptic shape having a long axis in the circumferential direction. Movement of the laser light 15 is performed by movement of the moving optical table 32 in the arrow-R direction.

The exposure apparatus includes a controlling mechanism 37 for forming a latent image corresponding to the two-dimensional pattern of the hexagonal lattice or the quasi-hexagonal lattice shown in Fig. 1B on the resist layer. The controlling mechanism 37 includes a formatter 29 and a driver 30. The formatter 29 includes a polarity reversing section, and the polarity reversing section controls irradiation timings of the laser light 15 to the resist layer. Receiving outputs of the polarity reversing section, the driver 30 controls the acoust-optic modulator 27.

In the roll-master exposure apparatus, the polarity-reversion formatter signal and the rotation controller of the recording apparatus are synchronized for one track to generate a signal such that the two-dimensional pattern is spatially linked, and the acoust-optic modulator 27 performs strength modulation. By patterning at a constant angular velocity (CAV), an appropriate rpm, an appropriate modulation frequency, and an appropriate feeding pitch, a hexagonal lattice or quasi-hexagonal-lattice pattern can be recorded. For example, as shown in Fig. 10B, in order to obtain a period of 315 nm in the circumferential direction, and a period of 300 nm in about 60° direction (about -60° direction) to the circumferential direction, the feeding pitch may be 251 nm (the Pythagorean law). The frequency of the polarity-reversion formatter signal is changed by rpm of the roll (for example, 1800 rpm, 900 rpm, 450 rpm, 225 rpm). For example, the frequencies of the polarity-reversion formatter signal opposing the rpm of the roll, 1800 rpm, 900 rpm, 450 rpm, and 225 rpm, are 37.70 MHz, 18.85 MHz, 9.34 MHz, and 4,71 MHz, respectively. In a desired recording area, a quasi-hexagonal-lattice pattern having a uniform spatial frequency (circumference 315 nm period, circumferential direction about 60° direction (about -60° direction) 300 nm period) can be formed by enlarging a far-ultraviolet laser light to a fivefold beam diameter by the beam expander (BEX) 33 on the moving optical table 32, irradiating the resist layer on the master 12 with lights via the objective lens 34 having a numerical aperture (NA) 0.9, and forming a fine latent image.

(Resist film formation step)

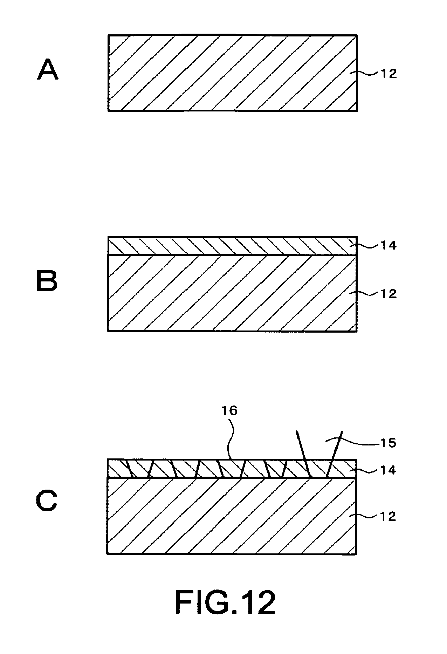

First, as shown in Fig. 12A, the columnar master 12 is prepared. The master 12 is, for example, a glass master. Next, as shown in Fig. 12B, the resist layer 14 is formed on the surface of the master 12. As a material of the resist layer 14, for example, any of organic resists and inorganic resists may be used. As an organic resist, for example, a novolac-series resist or a chemically-amplified resist may be used. Further, as an inorganic resist, for example, a metal oxide made of one kind or two or more kinds of transition metals such as tungsten and molybdenum may be used.

(Exposure step)

Next, as shown in Fig. 12C, by using the above-mentioned roll-master exposure apparatus, the master 12 is rotated, and the resist layer 14 is irradiated with the laser light (exposure beam) 15. In this case, while moving the laser light 15 in the height direction of the master 12 (direction parallel to center axis of columnar or cylindrical master 12), irradiation of the laser light 15 is intermittently performed, whereby the entire surface of the resist layer 14 is exposed to light. As a result, the latent image 16 corresponding to the path of the laser light 15 is formed on the entire surface of the resist layer 14 at pitches similar to the visible light wavelength.

The latent image 16 is arranged, for example, in a manner that a plurality of rows of tracks are formed on the master surface, and forms a hexagonal-lattice pattern or a quasi-hexagonal-lattice pattern. The latent image 16 has, for example, an ellipse shape having the long-axis direction in the track extending direction.

(Development step)

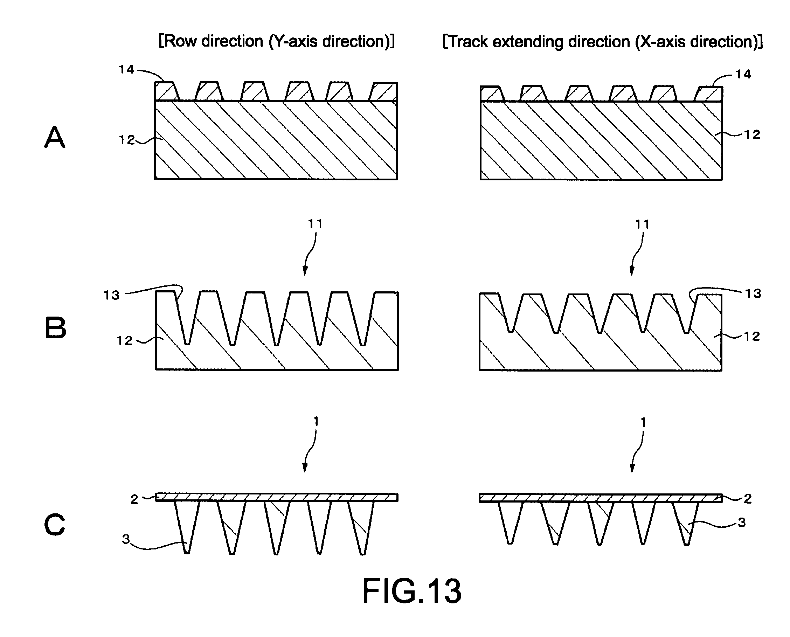

Next, while rotating the master 12, developer is dropped on the resist layer 14, and as shown in Fig. 13A, the resist layer 14 is development-processed. As shown in the drawing, in a case where the resist layer 14 is formed with a positive resist, the exposed portion exposed to the laser light 15 has a resolution speed to a developer higher than that of a nonexposed portion, whereby a pattern corresponding to the latent image (exposed portion) 16 is formed on the resist layer 14.

(Etching step)

Next, the pattern (resist pattern) of the resist layer 14 formed on the master 12 is used as a mask, and the surface of the master 12 is etching-processed. As a result, as shown in Fig. 13B, concave portions having elliptic-cone shapes or elliptic-truncated-cone shapes and having a long-axis direction in the track extending direction, that is, the structures 13, are formed. The etching method is, for example, performed by dry etching. In this case, by alternately performing etching processing and ashing processing, for example, the pattern of the cone structures 13 can be formed. Further, a glass master having a depth three times or more of the resist layer 14 (selectivity three or more) can be manufactured, and a high aspect ratio of the structures 3 can be attained. As dry etching, plasma etching by using a roll etching apparatus is preferable. The roll etching apparatus is a plasma etching apparatus having a columnar electrode, and is structured such that the columnar electrode is inserted in a hollow cavity of the cylindrical master 12, and plasma etching is performed on the cylindrical surface of the master 12.

As described above, for example, the roll master 11 having a hexagonal-lattice pattern or a quasi-hexagonal-lattice pattern having concave shapes having depths of about 120 nm to about 350 nm can be obtained.

(Replication step)

Next, for example, the roll master 11 and the substrate 2 such as a sheet on which a transcriptional material is coated are brought into intimate contact with one another, and are peeled while they are irradiated with ultraviolet rays and cured. As a result, as shown in Fig. 13C, a plurality of structures being convex portions are formed on one main surface of the substrate 2, and the conductive optical element 1 such as a moth-eye ultraviolet curable replica sheet is formed.

The transcriptional material is made of, for example, an ultraviolet curable material and an initiator, and includes, as necessary, filler, functional additives, and the like.

The ultraviolet curable material is made of, for example, monofunctional monomer, bifunctional monomer, polyfunctional monomer, and the like, and, specifically, one of the following materials or obtained by mixing a plurality of them. As a monofunctional monomer, employed is, for example, carboxylic acids (acrylic acid), hydroxys(2-hydroxyethyl acrylate, 2-hydroxypropyl acrylate, 4-hydroxybutyl acrylate), alkyl, alicyclics(isobutyl acrylate, t-butyl acrylate, isooctyl acrylate, lauryl acrylate, stearyl acrylate, isobonyl acrylate, cyclohexyl acrylate), other functional monomer (2-methoxyethyl acrylate, methoxyethylene glycol acrylate, 2-ethoxyethyl acrylate, tetrahydrofurfuryl acrylate, benzil acrylate, ethylcarbitol acrylate, phenoxyethyl acrylate, N,N-dimethylaminoethyl acrylate, N,N-dimethylaminopropyl acrylamide, N,N-dimethylacrylamide, acryloylmorpholine, N-isopropylacrylamide, N,N-diethyl acrylamide, N-vinylpyrrolidone, 2-(perfluorooctyl)ethyl acrylate, 3-perfluorohexyl-2-hydroxypropyl acrylate, 3-perfluorooctyl -2-hydroxypropyl acrylate, 2-(perfluorodecyl)ethyl acrylate, 2-(perfluoro-3-methylbutyl)ethyl acrylate), 2,4,6-tribromophenol acrylate, 2,4,6-tribromophenol methacrylate, 2-(2,4,6-tribromophenoxy)ethyl acrylate), 2-ethyl hexylacrylate, or the like.

As a bifunctional monomer, employed is, for example, tri(propyleneglycol)diacrylate, trimethylolpropane diallylether, urethaneacrylate, or the like.

As a polyfunctional monomer, employed is, for example, trimethylol propane triacrylate, dipentaerythritol penta and hexaacrylate, ditrimethylol propane tetraacrylate, or the like.

As an initiator, employed is, for example, 2,2-dimethoxy-1,2-diphenylethane-1-one, 1-hydroxy-cyclohexyl phenylketone, 2-hydroxy-2-methyl-1-phenylpropane-1-one, or the like.

As filler, any of inorganic particles and organic particles can be used. As inorganic particles, employed are, for example, metal oxide particles such as $SiO_2$, $TiO_2$, $ZrO_2$, $SnO_2$, or $Al_2O_3$.

As a functional additive, employed is, for example, a leveling agent, a surface conditioner, a deformer, or the like. As a material of the substrate 2, employed is, for example, methylmethacrylate(co)polymer, polycarbonate, styrene (co)polymer, methylmethacrylate-styrenecopolymer, cellulose diacetate, cellulose triacetate, cellulose acetate butyrate, polyester, polyamide, polyimide, polyethersulfone, polysulfone, polypropylene, polymethylpentene, polyvinyl chloride, polyvinyl acetal, polyether ketone, polyurethane, glass, or the like.

The molding method of the substrate 2 is not limited, and it may be an injection-molded body, an extrusion-molded body, or a cast-molded body. As necessary, a surface treatment such as a corona treatment may be applied on the substrate surface.

(Metal film film-formation step)

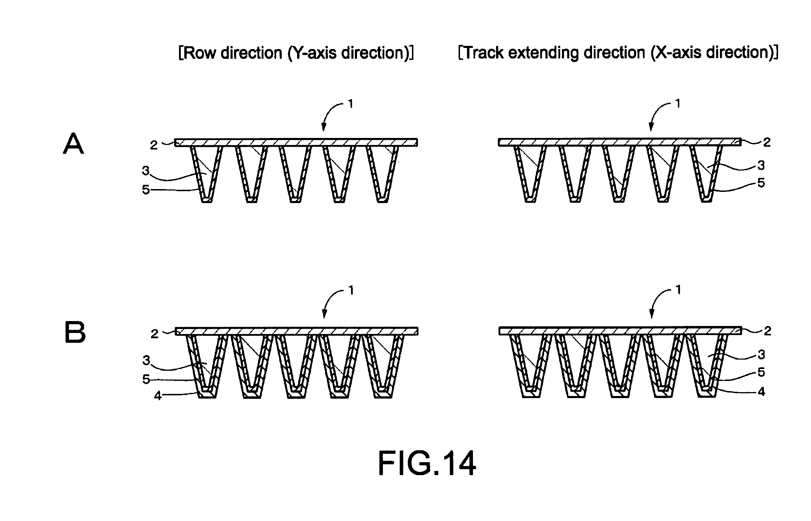

Next, as shown in Fig. 14A, as necessary, on the concave-convex surface of the substrate 2 on which the structures 3 are formed, the metal film 5 is film-formed. As a film-formation method of the metal film 5, employed are, for example, in addition to CVD methods (Chemical Vapor Deposition (chemical vapor deposition method): technology for precipitating thin film out of vapor by using chemical reaction) such as thermal CVD, plasma CVD, and optical CVD, PDV methods (Physical Vapor Deposition (physical vapor deposition methods): technology for forming thin film by flocculating material physically vaporized in vacuum on substrate) such as vacuum deposition, plasma-assisted deposition, sputtering, and ion plating.

(Film-formation step of transparent conductive film)

Next, as shown in Fig. 14B, on the concave-convex surface of the substrate 2 on which the structures 3 are formed, the transparent conductive film is film-formed. As the film-formation method of the transparent conductive film 4, employed is, for example, a method similar to the above-mentioned film-formation method of the metal film. Next, as necessary, annealing treatment is performed on the transparent conductive film 4. As a result, the transparent conductive film 4 is in a mixed state of amorphous and polycrystalline. As described above, the target conductive optical element 1 is obtained.

According to the first embodiment, because the transparent conductive film 4 having the film thickness of 9 nm or more and 50 nm or less is formed on the concave-convex surface of the substrate 2 on which the structures 3 is formed, a wide range of surface resistance can be achieved. Further, because the aspect ratio of the structure 4 is in a range of 0.63 or more and 1.28 or less, and the surface shape of the transparent conductive film 4 is modeled on the shapes of the structures 3, an excellent transmission property can be achieved.

A number of structures 3 are preferably arranged on the substrate 2 such that they are arranged such that a plurality of rows of tracks are formed on the surface of the substrate 2, and that they form a hexagonal-lattice pattern or a quasi-hexagonal-lattice pattern. As a result, the conductive optical element 1 having a high transmittance, a low reflected light, and less reflection can be provided. Because the antireflection function is obtained by forming the plurality of structures 3 on the surface, the wavelength dependence is low. The angle dependence is lower than that of an optical-film-type transparent conductive film. A number of layers of optical films are not used, the nanoimprint technology is used, and the high-throughput film structure is employed, whereby an excellent mass-productivity and a low cost can be attained.

The arrangement pitch P1 of the structures 3 in the same track is preferably longer than the arrangement pitch P2 of the structures 3 between the two adjacent tracks. In this manner, the filling rate of the structures 3 having elliptic-cone or elliptic-truncated-cone shapes can be improved, whereby an antireflection property can be improved.

In a case where the respective structures 3 form a hexagonal-lattice pattern or a quasi-hexagonal-lattice pattern on the substrate surface, the ratio P1/P2 preferably satisfies a relation $1.00 \leq P1/P2 \leq 1.2$ or $1.00 \leq P1/P2 \leq 1.2$, more preferably $1.00 \leq P1/P2 \leq 1.1$ or $1.00 < P1/P2 \leq 1.1$ where the arrangement pitch of the structures 3 in the same track is P1 and the arrangement pitch of the structures 3 between the two adjacent tracks is P2. With this numerical range, the filling rate of the structures 3 having elliptic-cone or elliptic-truncated-cone shapes can be improved, whereby an antireflection property can be improved.

In a case where the respective structures 3 form a hexagonal-lattice pattern or a quasi-hexagonal-lattice pattern on the substrate surface, each of the structures 3 preferably has an elliptic-cone or elliptic-truncated-cone shape having a long-axis direction in the track extending direction, and the inclination of the center portion is formed steeper than the inclinations of the tip portion and the bottom portion. With this shape, an antireflection property and a transmission property can be improved.

In a case where the respective structures 3 form a hexagonal-lattice pattern or a quasi-hexagonal-lattice pattern on the substrate surface, the height or depth of the structure 3 in the track extending direction is preferably smaller than the height or depth of the structure 3 in the track row direction. In a case where this relation is not satisfied, because it is necessary to make the arrangement pitch in the track extending direction longer, the filling rate of the structures in the track extending direction decreases. Decrease in the filling rate in this manner leads to decrease in the reflection property.

In a case where the structures 3 form a rectangular-lattice pattern or a quasi-rectangular-lattice pattern on the substrate surface, the arrangement pitch P1 of the structures 3 in the same track is preferably longer than the arrangement pitch P2 of the structures 3 between the two adjacent tracks. In this manner, the filling rate of the structures 3 having elliptic-cone or elliptic-truncated-cone shapes can be improved, whereby an antireflection property can be improved.

In a case where the structures 3 form a rectangular-lattice pattern or a quasi-rectangular-lattice pattern on the substrate surface, the ratio P1/P2 preferably satisfies the relation $1.4 < P1/P2 \leq 1.5$ where the arrangement pitch of the structures 3 in the same track is P1 and the arrangement pitch of the structures 3 between the two adjacent tracks is P2. With this numerical range, the filling rate of the structures 3 having elliptic-cone or elliptic-truncated-cone shapes can be improved, whereby an antireflection property can be improved.

In a case where the structures 3 form a rectangular-lattice pattern or a quasi-rectangular-lattice pattern on the substrate surface, each of the structures 3 preferably has an elliptic-cone or elliptic-truncated-cone shape having a long-axis direction in the track extending direction in which the inclination of the center portion is formed steeper than the inclinations of the tip portion and the bottom portion. With such a shape, an antireflection property and a transmission property can be improved.

In a case where the structures 3 form a rectangular-lattice pattern or a quasi-rectangular-lattice pattern on the substrate surface, the height or depth of the structure 3 in 45° direction or about 45° direction to the tracks is preferably smaller than the height or depth of the structure 3 in the track row direction. In a case where this relation is not satisfied, because the arrangement pitch in 45° direction or about 45° direction to the tracks should be longer, the filling rate of the structures 3 in 45° direction or about 45° direction to the tracks decreases. Decrease in the filling rate in this manner will lead to decrease in a reflection property.

A number of structures 3 provided on the substrate surface at fine pitches preferably form a plurality of rows of tracks, and form, in the three rows of adjacent tracks, a hexagonal-lattice pattern, a quasi-hexagonal-lattice pattern, a rectangular-lattice pattern, or a quasi-rectangular-lattice pattern. With this pattern, the filling density of the structures 3 on the surface can increase, whereby an antireflection efficiency of a visible light and the like increases, and a conductive optical element excellent in antireflection property and extremely high in transmittance can be achieved.

The conductive optical element 1 is preferably manufactured by a method in which an optical-disc master manufacturing process and an etching process are combined. A master for manufacturing an optical device can be efficiently manufactured in a short time, and it is possible to respond to upsizing of the substrate 2, whereby productivity of the conductive optical element 1 may increase.

<2. Second Embodiment >

[Structure of conductive optical element]

Fig. 15A is a schematic plan view showing one example of a structure of a conductive optical element according to a second embodiment of the present invention. Fig. 15B is a plan view showing the conductive optical element shown in Fig. 15A by enlarging part thereof. Fig. 15C is a sectional view of tracks T1, T3, ... of Fig. 15B. Fig. 15D is a sectional view of tracks T2, T4, ... of Fig. 15B. Fig. 15E is an abbreviated line diagram showing a modulated waveform of a laser light used to form a latent image corresponding to the tracks T1, T3, ... of Fig. 15B. Fig. 15F is an abbreviated line diagram showing a modulated waveform of a laser light used to form a latent image corresponding to the tracks T2, T4, ... of Fig. 15B.

The conductive optical element 1 according to a second embodiment is different from that of the first embodiment in that the respective structures 3 form a rectangular-lattice pattern or a quasi-rectangular-lattice pattern in the three rows of adjacent tracks. In this embodiment, a quasi-rectangular-lattice pattern is different from a regular-rectangular-lattice pattern, and indicates a distorted rectangular-lattice pattern by enlarging it in an extending direction (X-axis direction) of the tracks.

The height or depth of the structure 3 is not limited, and is, for example, about 100 nm-280 nm. The pitch P2 in (about) 45° direction to the track is, for example, about 200 nm-300 nm. The aspect ratio (height/arrangement pitch) of the structures 3 is, for example, about 0.54-1.13. Further, all the aspect ratios of the respective structures 3 are not limited to the same, but they may be structured such that the respective structures 3 have a constant height distribution.

The arrangement pitch P1 of the structures 3 in the same track is preferably longer than the arrangement pitch P2 of the structures 3 between the two adjacent tracks. Further, P1/P2 preferably satisfies a relation $1.4 < P1/P2 \leq 1.5$ where the arrangement pitch of the structures 3 in the same track is P1 and the arrangement pitch of the structures 3 between the two adjacent tracks is P2. With this numerical range, the filling rate of the structures 3 having elliptic-cone or elliptic-truncated-cone shapes can be improved, whereby an antireflection property can be improved. Further, the height or depth of the structure 3 in 45° direction or about 45° direction to the tracks is preferably smaller than the height or depth of the structure 3 in the track extending direction.

The height H2 in the arrangement direction (θ direction) of the structures 3 oblique to the track extending direction is preferably smaller than the height H1 of the structures 3 in the track extending direction. That is, the heights H1, H2 of the structures 3 preferably satisfy the relation H1>H2. In a case where the structures 3 are arranged so as to form a rectangular-lattice pattern or a quasi-rectangular-lattice pattern, the height H of the structure 3 is the height of the structure 3 in the extending direction (track direction).

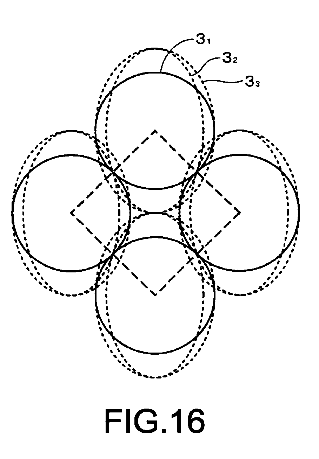

Fig. 16 is a diagram showing bottom surface shapes when ellipticities of the bottom surfaces of the structures 3 are changed. The ellipticities of ellipses $3_1$, $3_2$ and, $3_3$ are 100%, 163.3%, and 141%, respectively. By changing the ellipticities in this manner, the filling rate of the structures 3 on the substrate surface can be changed. In a case where the structures 3 form a rectangular lattice or quasi-rectangular-lattice pattern, the ellipticity e of the structure bottom surface is preferably $150 \leq e \leq 180\%$. This is because, with this range, the filling rate of the structures 3 can be improved, and an excellent antireflection property can be achieved.

The filling rate of the structures 3 on the substrate surface is in a range of 65% or more, preferably 73% or more, and more preferably 86% or more where the upper limit is 100%. In a case where the filling rate is in such ranges, an antireflection property can be improved.

Here, the filling rate (average filling rate) of the structures 3 is a value obtained as follows.
First, a picture of the surface of the conductive optical element 1 is taken in a Top View by using a scanning electron microscope (SEM: Scanning Electron Microscope). Next, a unit lattice Uc is randomly selected from a taken SEM photograph, and the arrangement pitch P1 and the track pitch Tp of the unit lattice Uc are measured (see Fig. 15B). Further, the area S of the bottom surface of any one of the four structures 3 included in the unit lattice Uc is measured by image processing. Next, by using the measured arrangement pitch P1, track pitch Tp, and area S of the bottom surface, the filling rate is obtained based on the following Expression (4).

$$\texttt{Filling rate = (S(tetra)/S(unit))x100 ... (2)}$$

Unit lattice area: S(unit) = 2x((P1xTp)x(1/2)) = P1xTp
Areas of bottom surfaces of structures in unit lattice: S(tetra) = S

The above-mentioned filling rate calculation processing is performed for ten unit lattices randomly selected from the taken SEM photograph. Further, measured values are simply averaged (arithmetic average) to thereby obtain the average rate of the filling rate as a filling rate of the structures 3 of the substrate surface.

The ratio of the diameter 2r to the arrangement pitch P1 ((2r/P1)x100) is 64% or more, preferably 69% or more, and more preferably 73% or more. This is because, with this range, the filling rate of the structures 3 can be improved, and an antireflection property can be improved. Here, the arrangement pitch P1 is the arrangement pitch of the structures 3 in the track direction, and the diameter 2r is the diameter of the structure bottom surface in the track direction. Note that, in a case where the structure bottom surface has a circular shape, the diameter 2r is the diameter, and, in a case where the structure bottom surface has an elliptic shape, the diameter 2r is the long diameter.

[Structure of roll master]

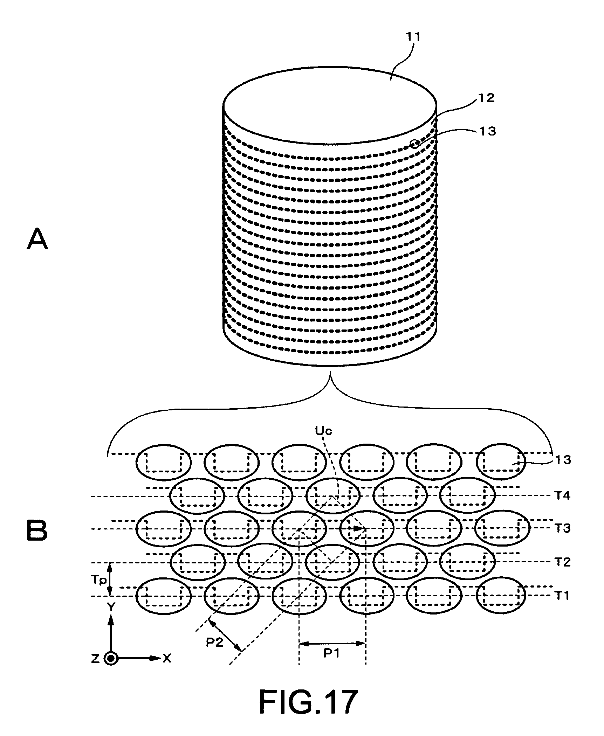

Figs. 17 show one example of a structure of a roll master for manufacturing a conductive optical element having the above-mentioned structure. This roll master is different from that of the first embodiment in that the concave structures 13 form a rectangular-lattice pattern or a quasi-rectangular-lattice pattern on its surface.

The roll-master exposure apparatus is used, a two-dimensional pattern is spatially linked, a polarity-reversion formatter signal and a rotation controller of a recording apparatus are synchronized for one track to generate a signal, and patterning is performed at CAV and at an appropriate feeding pitch. As a result, a rectangular-lattice pattern or a quasi-hexagonal-lattice pattern can be recorded. By appropriately setting the frequency of the polarity-reversion formatter signal and the rpm of the roll, a lattice pattern having a constant spatial frequency is preferably formed on a desired recording area on the resist on the master 12 by irradiation of a laser light.

<3. Third Embodiment>

[Structure of conductive optical element]

Fig. 18A is a schematic plan view showing one example of a structure of a conductive optical element according to a third embodiment of the present invention. Fig. 18B is a plan view showing the conductive optical element shown in Fig. 18A by enlarging part thereof. Fig. 18C is a sectional view of tracks T1, T3, ... of Fig. 18B. Fig. 18D is a sectional view of tracks T2, T4, ... of Fig. 18B.

The conductive optical element 1 according to the third embodiment is different from that of the first embodiment in that the tracks T have arc shapes, and the structures 3 are arranged in an arc-shaped manner. As shown in Fig. 18B, the structures 3 are arranged such that, in the three rows of adjacent tracks (T1-T3), a quasi-hexagonal-lattice pattern in which the centers of the structures 3 are located on the respective points a1-a7 are formed. Here, the quasi-hexagonal-lattice pattern is different from a regular-hexagonal-lattice pattern, and indicates a distorted hexagonal-lattice pattern along the arc shapes of the tracks T. Alternatively, it is different from a regular-hexagonal-lattice pattern, and indicates a hexagonal-lattice pattern distorted along the arc shapes of the tracks T and enlarged in the track extending direction (X-axis direction).
The structure of the conductive optical element 1 other than the above description is similar to that of the first embodiment, so the description will be omitted.

[Structure of disk master]

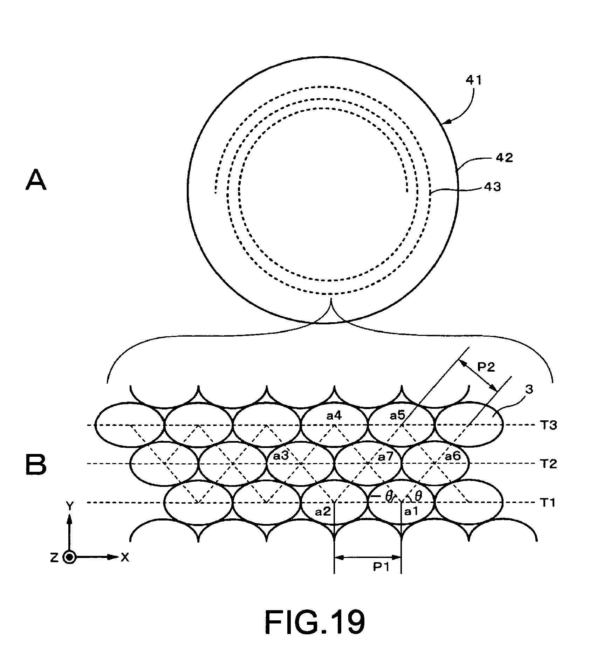

Fig. 19A and Fig. 19B show one example of the structure of a disk master for manufacturing a conductive optical element having the above-mentioned structure. As shown in Fig. 19A and Fig. 19B, the disk master 41 has a structure in which a number of structures 43 being concave portions are arrayed on the surface of a disk-shaped master 42. The structures 13 are two-dimensionally arrayed at pitches smaller than the wavelength band of a light under a usage environment of the conductive optical element 1, for example, similar to the wavelength of a visible light. The structures 43 are arranged, for example, on concentric or spiral tracks.

The structure of the disk master 41 other than the above is similar to that of the roll master 11 of the first embodiment, and its description will be omitted.

[Manufacturing method of conductive optical element]

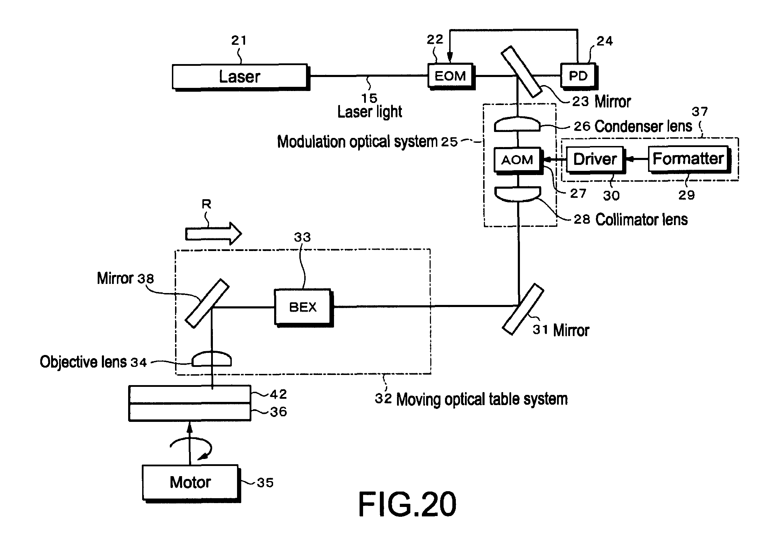

First, with reference to Fig. 20, an exposure apparatus for manufacturing the disk master 41 having the above-mentioned structure will be described.

The moving optical table 32 includes the beam expander 33, a mirror 38, and the objective lens 34. The laser light 15 guided to the moving optical table 32 is shaped to a desired beam shape by the beam expander 33, and after that, irradiated on a resist layer on the disk-shaped master 42 via the objective lens 34. The master 42 is mounted on a turntable (not shown.) connected to the spindle motor 35. Further, while rotating the master 42 and moving the laser light 15 in the rotational radius direction of the master 42, the resist layer on the master 42 is intermittently irradiated with the laser light, whereby the exposure step of the resist layer is performed. The formed latent image has an approximately elliptic shape having a long axis in the circumferential direction. Movement of the laser light 15 is performed by movement of the moving optical table 32 in the arrow-R direction.

The exposure apparatus shown in Fig. 20 includes the controlling mechanism 37 for forming a two-dimensional-patterned latent image of the hexagonal lattice or the quasi-hexagonal lattice shown in Fig. 18B on the resist layer. The controlling mechanism 37 includes the formatter 29 and the driver 30. The formatter 29 includes a polarity reversing section, and the polarity reversion section controls irradiation timings of the laser light 15 to the resist layer. Receiving the output of the polarity reversing section, the driver 30 controls the acoust-optic modulator 27.

The controlling mechanism 37 synchronizes the strength modulation of the laser light 15 by the AOM 27, the driving rpm of the spindle motor 35, and the moving speed of the moving optical table 32 for one track, respectively, such that a two-dimensional pattern of a latent image is spatially linked. The master 42 is rotation-controlled at a constant angular velocity (CAV). Further, patterning is performed at an appropriate rpm of the master 42 by the spindle motor 35, at an appropriate frequency modulation of a laser strength by the AOM 27, and at an appropriate feeding pitch of the laser light 15 by the moving optical table 32. As a result, on the resist layer, a latent image of a hexagonal-lattice pattern or a quasi-hexagonal-lattice pattern is formed.

Further, a control signal of the polarity reversing section is gradually changed such that the spatial frequency (pattern density of latent image, P1: 330, P2: 300 nm, P1: 315 nm, P2: 275 nm, or P1: 300 nm, P2: 265 nm) is uniform. More specifically, while changing irradiation periods of the laser light 15 on the resist layer for one track, exposure is performed, and the controlling mechanism 37 performs frequency modulation of the laser light 15 such that P1 is approximately 330 nm (or 315 nm, 300 nm) in each track T. That is, the modulation is controlled such that as the track position moves away from the center of the disk-shaped master 42, the irradiation period of the laser light is smaller. As a result, a nano-pattern having a uniform spatial frequency can be formed on the entire surface of the substrate.

Hereinafter, one example of the manufacturing method of the conductive optical element according to the third embodiment of the present invention will be described.

First, other than exposing the resist layer formed on the disk-shaped master with lights by using the exposure apparatus having the above-mentioned structure, the disk master 41 is manufactured similar to the first embodiment. Next, the disk master 41 and the substrate 2 such as an acrylic sheet on which an ultraviolet curable resin is coated are brought into intimate contact with one another, and after they are irradiated with ultraviolet rays and the ultraviolet curable resin is cured, the substrate 2 is peeled from the disk master 41. As a result, a disk-shaped optical device in which the plurality of structures 3 are arrayed on the surface can be obtained. Next, after the metal film 5 is, as necessary, film-formed on the concave-convex surface of the optical device on which the plurality of structures 3 are formed, the transparent conductive film 4 are film-formed. As a result, the disk-shaped conductive optical element 1 can be obtained. Next, out of the disk-shaped conductive optical element 1, the conductive optical element 1 having a predetermined shape such as a rectangular shape is cut out. As a result, the target conductive optical element 1 is manufactured.

According to the third embodiment, similar to the case where the structures 3 are linearly arrayed, productivity is high, and the conductive optical element 1 having an excellent antireflection property can be achieved.

<4. Fourth Embodiment>

Fig. 21A is a schematic plan view showing one example of the structure of the conductive optical element according to a fourth embodiment of the present invention. Fig. 21B is a plan view showing the conductive optical element shown in Fig. 21A by enlarging part thereof.

The conductive optical element 1 according to the fourth embodiment is different from that of the first embodiment in that the structures 3 are arrayed on a meandering track (hereinafter, referred to as wobble track.). The wobbles in the respective tracks on the substrate 2 is preferably in sync with each other. That is, the wobbles are preferably synchronized wobbles. By making the wobbles in sync with each other, the unit lattice shape of a hexagonal lattice or a quasi-hexagonal lattice is maintained, and the filling rate can be maintained high. The waveform of the wobble track is, for example, a sine wave, a triangular wave or the like. The waveform of the wobble track is not limited to a periodic waveform, and may be a nonperiodic waveform. The wobble amplitude of the wobble track is selected at, for example, about $\pm 10$ $\mu$m. The fourth embodiment is similar to the first embodiment other than the above description.

According to the fourth embodiment, since the structures 3 are arrayed on the wobble track, generation of unevenness in the outer appearance can be suppressed.

<5. Fifth Embodiment>

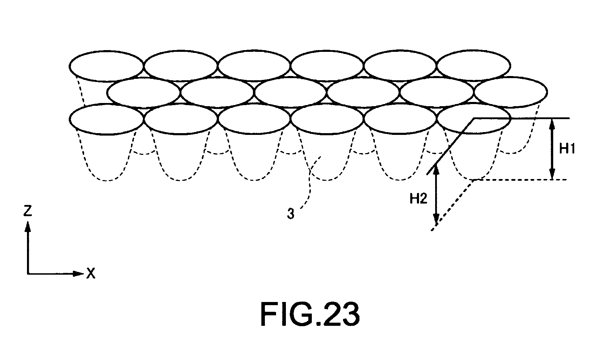

Fig. 22A is a schematic plan view showing one example of a structure of a conductive optical element according to a fifth embodiment of the present invention. Fig. 22B is a plan view showing the conductive optical element shown in Fig. 22A by enlarging part thereof. Fig. 22C is a sectional view of tracks T1, T3, ... of Fig. 22B. Fig. 22D is a sectional view of tracks T2, T4, ... of Fig. 22B. Fig. 23 is a perspective view showing the conductive optical element shown in Fig. 22A by enlarging part thereof.

The conductive optical element 1 according to the fifth embodiment is different from that of the first embodiment in that a number of structures 3 being concave portions are arrayed on the substrate surface. The shape of the structure 3 is a concave shape obtained by inverting the convex shape of the structures 3 of the first embodiment. Note that, in a case where the structure 3 is a concave portion as described above, the opening portion (mouth portion of concave portion) of the structure 3 being a concave portion is defined as a lower portion, and the lowest portion (deepest portion of concave portion) in the depth direction of the substrate 2 is defined as a top portion. That is, by the structures 3 being void spaces, the top portion and the lower portion are defined. Further, according to the fifth embodiment, since the structures are concave portions, the height H of the structure 3 in Expression (1) and the like is the depth H of the structure 3.

The fifth embodiment is similar to the first embodiment other than the above description.

In the fifth embodiment, the shape of the structure 3 being a convex shape in the first embodiment is inverted to a concave shape, and thus it can achieve effects similar to those of the first embodiment.

<6. Sixth Embodiment>

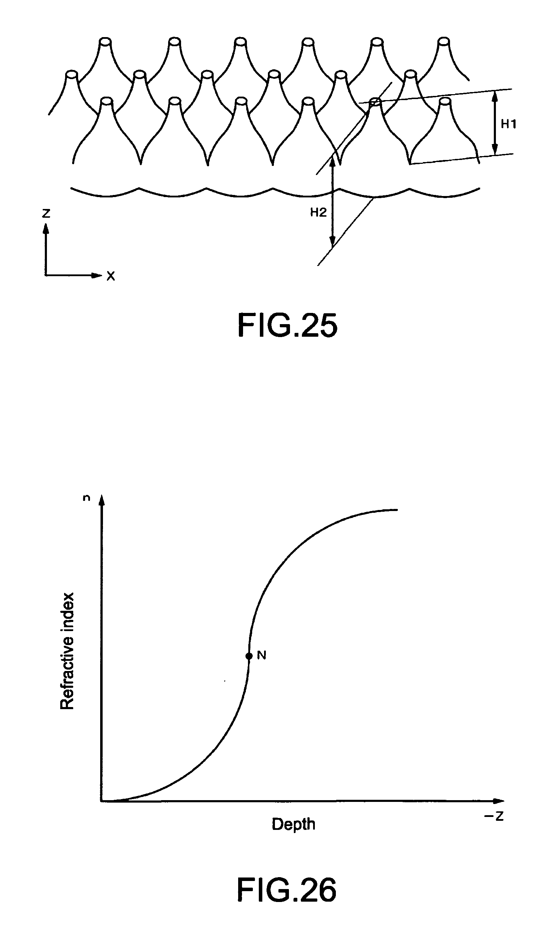

Fig. 24A is a schematic plan view showing one example of a structure of a conductive optical element according to a fifth embodiment of the present invention. Fig. 24B is a plan view showing the conductive optical element shown in Fig. 24A by enlarging part thereof. Fig. 24C is a sectional view of tracks T1, T3, ... of Fig. 24B. Fig. 24D is a sectional view of tracks T2, T4, ... of Fig. 24B. Fig. 25 is a perspective view showing the conductive optical element shown in Fig. 24A by enlarging part thereof.

The conductive optical element 1 includes the substrate 2, the plurality of structures 3 formed on the surface of the substrate 2, and the transparent conductive film 4 formed on those structures 3. Further, from a viewpoint of improving a surface resistance, the metal film 5 is preferably further provided between the structures 3 and the transparent conductive film 4. The structures 3 are cone-shaped convex portions. The lower portions of the adjacent structures 3 are joined such that their lower portions are overlapped with each other. Of the adjacent structures 3, the most adjacent structures 3 are preferably arranged in the track direction. This is because it is easy to arrange the most adjacent structures 3 in such a position in the manufacturing method described below. The conductive optical element 1 has a function to prevent a light entering the substrate surface on which the structures 3 are provided from reflecting. Hereinafter, as shown in Fig. 24A, two orthogonal axes on one main surface of the substrate 2 are referred to as X axis and Y axis, and an axis vertical to one main surface of the substrate 2 is referred to as Z axis. Further, in a case where there are gap portions 2a between the structures 3, fine asperity shapes are preferably provided on the gap portions 2a. By providing the fine asperity shapes, a reflection coefficient of the conductive optical element 1 can further decrease.

Fig. 26 shows one example of a refractive index profile of a conductive optical element according to the first embodiment of the present invention. As shown in Fig. 26, an effective index to the depth direction (in Fig. 24A, - Z-axis direction) of the structures 3 is changed so as to gradually increase to the substrate 2 and draw an S-shaped curved line. That is, the refractive index profile has one inflection point N. The inflection point corresponds to the shape of the side surface of the structures 3. By changing the effective index, a boundary to a light becomes unclear, whereby a reflected light decreases, and an antireflection property of the conductive optical element 1 can be improved. The change of the effective index to the depth direction is preferably monotone increasing. Here, the S-shape includes an inverse S-shape, that is, Z-shape.

Further, the change of the effective index to the depth direction is preferably steeper than the average value of the inclination of the effective index in at least one side of the top portion side and the substrate side of the structures 3, and more preferably steeper than the above-mentioned average value in both of the top portion side and the substrate side of the structures 3. As a result, an excellent antireflection property can be achieved.

The lower portions of the structures 3 are, for example, joined to part or all of the lower portions of the adjacent structures 3. By joining the lower portions of the structures, the change of the effective index to the depth direction of the structures 3 can be smooth. As a result, an S-shaped refractive index profile can be obtained. Further, by joining the lower portions of the structures, the filling rate of the structures can increase. Note that, in Fig. 24B, positions of the joined portions when all the adjacent structures 3 are joined are indicated by black-dot marks ".". Specifically, the joined portions are formed between all the adjacent structures 3, between the adjacent structures 3 in the same track (for example, between a1-a2), or between the structures 3 in the adjacent tracks (for example, between a1-a7, between a2-a7). In order to attain a smooth refractive index profile and achieve an excellent antireflection property, the joined portions are preferably formed between all the adjacent structures 3. In order to easily form the joined portions by using the manufacturing method described below, the joined portions are preferably formed between the adjacent structures 3 in the same track. In a case where the structures 3 are periodically arranged in a hexagonal-lattice pattern or a quasi-hexagonal-lattice pattern, for example, they are joined in an orientation in which the structures 3 are sixfold symmetric.

The structures 3 are preferably joined such that the lower portions thereof are overlapped with each other. By joining the structures 3 in this manner, a refractive index profile having an S-shape can be obtained, and the filling rate of the structures 3 can be improved. The structures are preferably joined at portions 1/4 or less of the maximum value of the wavelength band of a light under a usage environment of a light path length in view of a refractive index. As a result, an excellent antireflection property can be achieved.

The height of the structure 3 is preferably set corresponding to the wavelength range of a transmitted light, as appropriate. Specifically, the height of the structure 3 is preferably 5/14 or more and 10/7 or less of the maximum value of the wavelength band of a light under a usage environment, more preferably 2/5 or more and 10/7 or less of the above-mentioned maximum value, and further preferably 3/7 or more and 10/7 or less of the above-mentioned maximum value. When it is set to 5/14 or more of the maximum value, a reflection coefficient is suppressed to 0.3% or less in almost all the range of a visible range of 400 nm-700 nm. When it is set to 2/5 or more of the maximum value, a reflection coefficient is suppressed to 0.1% or less in almost all the range of the visible range of 400 nm-700 nm. In the above-mentioned manufacturing method, the structures 3 are easily formed when it is set to 10/7 or less of the maximum value. In a case where a visible light is transmitted, the height of the structure 3 is preferably 100 nm-320 nm. The aspect ratio (height H/average arrangement pitch P) of the structures 3 is preferably set in a range of 0.2 or more and 1.78 or less.

As a material of the structures 3, for example, one mainly containing an ionizing radiation curable resin to be cured by ultraviolet rays or electron beams or a thermal curable resin to be cured by heat is preferable, and one mainly containing an ultraviolet curable resin which can be cured by ultraviolet rays is the most preferable.

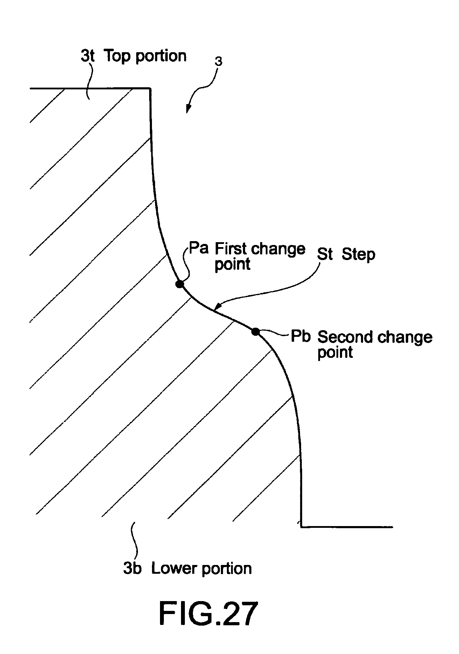

Fig. 27 is an enlarged sectional view showing one example of the shape of a structure. The side surface of the structure 3 is preferably gradually enlarged to the substrate 2, and preferably changes in a manner of drawing a square-root shape of the S-shaped curved line shown in Fig. 26. With this side-surface shape, an excellent antireflection property can be achieved, and a transcriptional property of the structures 3 can be improved.

A top portion 3t of the structure 3 has, for example, a planer shape or a convex shape tapered to the tip. In a case where the top portion 3t of the structure 3 has a planer shape, the area ratio of a planer area St of the structure top portion to the area S of the unit lattice (St/S) is preferably made smaller as the height of the structure 3 increases. In this manner, an antireflection property of the conductive optical element 1 can be improved. Here, the unit lattice is, for example, a hexagonal lattice, a quasi-hexagonal lattice, or the like. The area ratio of the structure bottom surface (area ratio of area Sb of structure bottom surface to area S of unit lattice (Sb/S) is preferably close to the area ratio of the top portion 3t. Further, on the top portions 3t of the structures 3, a low-refractive-index layer having a refractive index lower than that of the structures 3 may be formed, and, by forming such a low-refractive-index layer, a reflection coefficient can decrease.

The side surface of the structure 3 excluding the top portion 3t and a lower portion 3b preferably includes one pair of a first change point Pa and a second change point Pb in this order in the direction from the top portion 3t to the lower portion 3b. As a result, the effective index to the depth direction (in Fig. 24A, -Z-axis direction) of the structure 3 can include one inflection point.

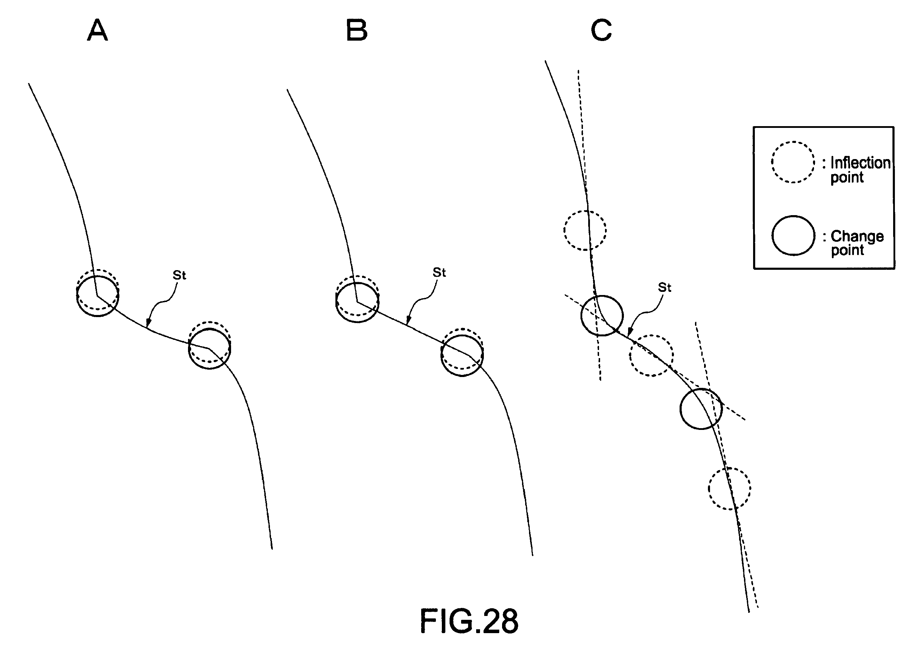

Here, the first change point and the second change point are defined as follows. As shown in Fig. 28A and Fig. 28B, in a case where the side surface of the structure 3 between the top portion 3t and the lower portion 3b is formed in a manner that a plurality of smooth curved surfaces are discontinuously joined from the top portion 3t of the structure 3 to the lower portion 3b, joined points are the change points. The change points correspond to inflection points. Although it is impossible to accurately perform differentiation at the joined point, here, such ultimate inflection points are also referred to as inflection points. In a case where the structure 3 has the above-mentioned curved surface, it is preferable that, after an inclination from the top portion 3t of the structure 3 to the lower portion 3b becomes gentler from the first change point Pa being a boundary, it become steeper from the second change point Pb being a boundary.

As shown in Fig. 28C, in a case where the side surface of the structure 3 from the top portion 3t to the lower portion 3b is formed in a manner that a plurality of smooth curved surfaces are continuously and smoothly joined from the top portion 3t of the structure 3 to the lower portion 3b, change points are defined as follows. As shown in Fig. 28C, a point on the curved surface closest to an intersection on which respective tangent lines on two inflection points existing on the side surface of the structure intersect with each other is referred to as change point.

The structure 3 preferably includes one step St on the side surface between the top portion 3t and the lower portion 3b. By providing one step St as described above, the above-mentioned refractive index profile can be obtained. That is, the effective index to the depth direction of the structure 3 can gradually increase to the substrate 2, and can be changed so as to draw an S-shape curved line. As the step, for example, an inclined step or a parallel step is employed, and the inclined step is preferable. This is because, if the step St is an inclined step, a transcriptional property better than that in a case where the step St is a parallel step can be obtained.

The inclined step indicates, not one parallel to the substrate surface, but a step inclining in a manner that the side surface expands in the direction from the top portion of the structure 3 to the lower portion. The parallel step indicates a step parallel to the substrate surface. Here, the step St is a section set by the above-mentioned first change point Pa and second change point Pb. Note that it is assumed that the step St does not include the flat surface of the top portion 3t and the curved surface or flat surface between the structures.

From a viewpoint of easy formation, the structure 3 preferably has an axisymmetric cone shape except for the lower portion joined to the adjacent structures 3, or a cone shape obtained by enlarging or reducing a cone shape in the track direction. As the cone shape, for example, a cone shape, a truncated-cone shape, an elliptic-cone shape, an elliptic-truncated-cone shape, or the like may be employed. Here, the cone shape conceptually includes, as described above, other than a cone shape and a truncated-cone shape, an elliptic-cone shape and an elliptic-truncated-cone shape. Further, the truncated-cone shape indicates a shape obtained by truncating the top portion of a cone shape, and the elliptic-truncated-cone shape indicates a shape obtained by truncating the top portion of an elliptic cone. Note that the overall shape of the structure 3 is not limited to those shapes, but may be a shape in which an effective index to the depth direction of the structures 3 gradually increases to the substrate 2 and is changed in an S-shape. Further, the cone shape includes not only a perfect cone shape, but also, as described above, a cone shape having the step St on the side surface.

The structure 3 having an elliptic-cone shape has a cone structure having an elliptic shape, an oval shape, or an egg shape having a bottom surface having a long axis and a minor axis, and has a structure having a convex shape in which a top portion is narrowed and tapered to the tip. The structure 3 having an elliptic-truncated-cone shape is a structure having a cone structure having a bottom surface having an elliptic shape, an oval shape, or an egg shape having a long axis and a minor axis, and having a top portion being a flat surface. In a case where the structure 3 is an elliptic-cone shape or an elliptic-truncated-cone shape, the structure 3 is preferably formed on the substrate surface in a manner that the long-axis direction of the bottom surface of the structures 3 is in the track extending direction (X-axis direction).

The cross-sectional area of the structure 3 changes in the depth direction of the structure 3 so as to correspond to the above-mentioned refractive index profile. The cross-sectional area of the structure 3 preferably monotonically increases in the depth direction of the structure 3. Here, the cross-sectional area of the structure 3 indicates a cross-sectional area parallel to the substrate surface on which the structures 3 are arrayed. The cross-sectional area of the structure is preferably changed in the depth direction such that the cross-sectional area ratio of the structure 3 in positions different in depth corresponds to the above-mentioned effective index profile corresponding to the position.

The structure 3 including the above-mentioned step is, for example, obtained by shape-transcription by using a master manufactured as follows. That is, in the etching step of manufacturing a master, by adjusting processing times of the etching processing and the ashing processing as appropriate, a master having a step formed on the side surface of the structure (concave portion) is manufactured.

According to the sixth embodiment, the structure 3 has a cone shape, and the effective index to the depth direction of the structure 3 gradually increases to the substrate 2 and changes so as to draw an S-shaped curved line. As a result, because of a shape effect of the structure 3, a boundary to a light becomes unclear, whereby a reflected light decreases. As a result, an excellent antireflection property can be achieved. Specifically, in a case where the height of the structure 3 is large, an excellent antireflection property can be achieved. Specifically, in a case where the height of the structure 3 is preferably 5/14 or more and 10/7 or less of the maximum value of the wavelength band of a light under a usage environment, more preferably 2/5 or more and 10/7 or less, and further preferably 3/7 or more and 10/7 or less, an especially excellent antireflection property can be achieved. Further, because the lower portions of the adjacent structures 3 are joined with each other in a manner that the lower portions are overlapped with each other, the filling rate of the structures 3 can increase, and the structures 3 can be easily formed.

An effective index profile to the depth direction of the structure 3 is preferably changed in an S-shape, and the structures are preferably arranged in a (quasi-)hexagonal lattice or (quasi-)rectangular lattice array. Further, each of the structures 3 preferably has an axisymmetric structure or a structure obtained by enlarging or reducing an axisymmetric structure in the track direction. Further, the adjacent structures 3 are preferably joined in the vicinity of the substrate. With this structure, an antireflection structure is easily manufactured, and a high-performance antireflection structure can be manufactured.

In a case where the conductive optical element 1 is manufactured by using a method in which an optical-disc master manufacturing process and an etching process are combined, compared to a case where the conductive optical element 1 is manufactured by using electron-beam exposure, a time required for a master manufacturing process (exposing time) can be shortened significantly. Therefore, productivity of the conductive optical element 1 can be improved significantly.

In a case where the shape of the top portion of the structure 3 is not sharp-pointed but a planer shape, a durability of the conductive optical element 1 can be improved. Further, a peel property of the structures 3 to the roll master 11 can also be improved. In a case where the step of the structure 3 is an inclined step, a transcriptional property can be improved compared to a case of a parallel step.

<7. Seventh Embodiment>

Fig. 29 is a sectional view showing one example of the structure of a conductive optical element according to a seventh embodiment of the present invention. As shown in Fig. 29, the conductive optical element 1 is different from that of the first embodiment in that it includes a transparent conductive layer 8 on the substrate 2, and a number of structures 3 having transparent conductivity are formed on the surface of the transparent conductive layer 8. The transparent conductive layer 8 includes at least one kind of materials in a group consisting of conductive polymer, silver-series filler, carbon nanotube, and ITO powder. As a conductive polymer, for example, a conductive polymer material such as polythiophene-series, polyaniline-series, polypyrrole-series, or the like can be used, and a polythiophene-series conductive polymer material is preferably used. As a polythiophene-series conductive polymer material, a PEDOT/PSS-series material obtained by doping PSS (polystyrene sulfonate) in PEDOT (polyethylene dioxythiophene) is preferably used.

The seventh embodiment can achieve effects similar to those of the above-mentioned first embodiment.

<8. Eighth Embodiment>

Fig. 30 is a sectional view showing one example of the structure of a conductive optical element according to an eighth embodiment of the present invention. As shown in Fig. 30, the conductive optical element 1 is different from that of the first embodiment in that it further includes the structures 3 on the other main surface (second main surface) opposite to one main surface (first main surface) on which the structures 3 are formed.

Arrangement patterns, aspect ratios, and the like of the structures 3 on the both main surfaces of the conductive optical element 1 are not necessarily the same, but different arrangement patterns, aspect ratios, and the like may be selected according to desired properties. For example, the arrangement pattern of one main surface may be a quasi-hexagonal-lattice pattern, and the arrangement pattern of the other main surface may be a quasi-rectangular-lattice pattern.

According to the seventh embodiment, because the plurality of structures 3 are formed on the both main surfaces of the substrate 2, it is possible to give light antireflection functions to both the light-entering surface and the light-output surface of the conductive optical element 1. As a result, a light transmission property may be further improved.

<9. Ninth Embodiment >

Fig. 31A is a perspective view showing one example of the structure of a touch panel according to a ninth embodiment of the present invention. Fig. 31B is a sectional view showing one example of the structure of the touch panel according to the ninth embodiment of the present invention. The touch panel 50 is a so-called resistive touch. As a resistive touch panel, any one of an analog resistive touch panel and a digital resistive touch panel may be employed.

The touch panel 50 includes a first conductive optical element 51, and a second conductive optical element 52 facing the first conductive optical element 51. The first conductive optical element 51 and the second conductive optical element 52 are bonded together via a bonding unit 55 arranged between their peripheral portions. As the bonding unit 55, for example, an adhesive paste, an adhesive tape, or the like is used. From a viewpoint of improving an abrasion-resistance, the touch panel 50 preferably includes a hard coat layer 7 on a touch-side surface of the first conductive optical element 51. An antifouling property is preferably given to the surface of the hard coat layer 7. The touch panel 50 is, for example, bonded to a display device 54 via a bonding layer 53. As a material of the bonding layer 53, for example, an acrylic, rubber, or silicon-series adhesive agent, or the like can be used, and from a viewpoint of a transparency, an acrylic adhesive agent is preferable.

(Display device)

As the display device 54, for example, various display devices such as a liquid crystal display, a CRT (Cathode RayTube) display, a plasma display (Plasma Display Panel: PDP), an electro luminescence (Electro Luminescence: EL) display, and a surface-conduction electron-emitter display (Surface-conduction Electron-emitter Display: SED) can be used.

(Conductive optical element)

As at least one of the first conductive optical element 51 and the second conductive optical element 52, any of the conductive optical elements 1 according to the first-seventh embodiments is used. In a case where any of the conductive optical elements 1 according to the first-seventh embodiments are used as the both conductive optical elements, as the both conductive optical elements, the conductive optical elements 1 according to different embodiments may be used.

The first conductive optical element 51 includes a first substrate 2 having a facing surface facing the second conductive optical element 52, and a first transparent conductive film 4 formed on the facing surface of the first substrate 2. The second conductive optical element 52 includes a second substrate 2 having a facing surface facing the first conductive optical element 51, and a second transparent conductive film 4 formed on the facing surface of the second substrate. On at least one of the facing surfaces of the first and second substrates 2, a number of structures 3 structured by convex portions or concave portions at fine pitches of the wavelength of a visible light or less are formed. From a viewpoint of an antireflection property and a transmission property, the structures 3 are preferably formed on the both conductive optical elements. The first or second transparent conductive film 4 formed on the structures 3 has a shape modeled on the shapes of the structures 3.

According to the ninth embodiment, because a number of structures 3 are formed on at least one of the facing surfaces of the first conductive optical element 51 and the second conductive optical element 52, the touch panel 50 having an excellent antireflection property and a transmission property can be achieved. Therefore, a visibility of the display device 54 can be improved. In particular, a visibility of the display device 54 in the outside can be improved.

(Modified Example)

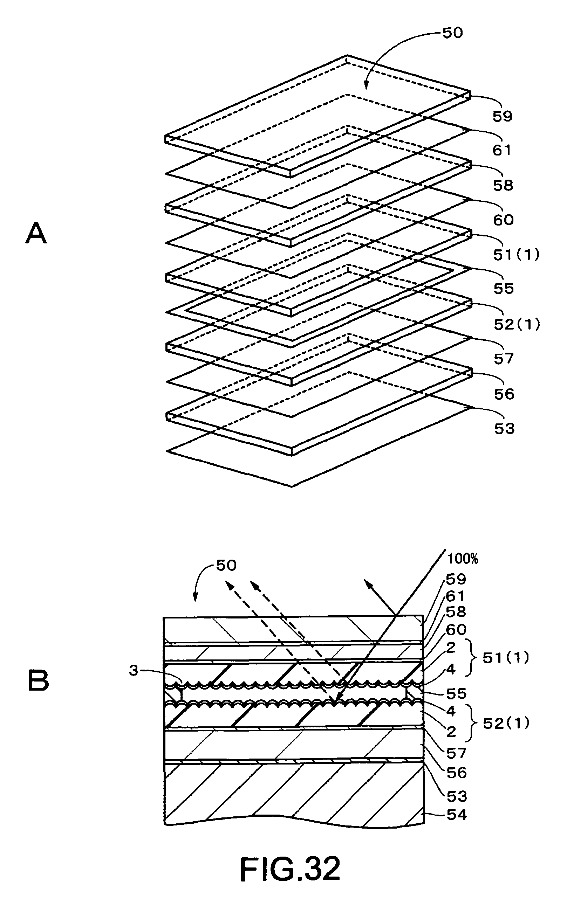

Fig. 32A is a perspective view showing a modified example of the touch panel according to the ninth embodiment of the present invention. Fig. 32B is a sectional view showing the modified example of the touch panel according to the ninth embodiment of the present invention.

The touch panel 50 preferably further includes a polarizer 58 bonded to a touch-side surface of the first conductive optical element 51 via a bonding layer 60 and the like. In a case of providing the polarizer 58 in this manner, as the substrates 2 of the first conductive optical element 51 and the second conductive optical element 52, λ/4 phase difference films are preferably used. By employing the polarizer 58 and the substrates 2 being λ/4 phase difference films in this manner, a reflection coefficient can decrease, and a visibility can increase.

On a touch-side surface of the first conductive optical element 51, a monolayer or multilayer of antireflection layer (not shown) is preferably formed. This is because a reflection coefficient can decrease, and a visibility can increase. Further, on the touch-side surface of the first conductive optical element 51, a front panel (surface member) 59 bonded together via a bonding layer 61 and the like may be further provided. On at least one of both main surfaces of the front panel 59, similar to the first conductive optical element 51, a number of structures 3 may be formed. Further, to a surface of the second conductive optical element 52 bonded to the display device 54 and the like, a glass substrate 56 may be bonded via a bonding layer 57.

Also on the peripheral portion of at least one of the first conductive optical element 51 and the second conductive optical element 52, the plurality of structures 3 are preferably formed. This is because, because of an anchor effect, an intimate-contact property between the first conductive optical element 51 or the second conductive optical element 52 and a bonding layer 55 can be improved.

Further, also on the surface of the second conductive optical element 52 to which the display device 54 and the like are bonded, the plurality of structures 3 are preferably formed. This is because, because of an anchor effect of the plurality of structures 3, an adhesion property between the touch panel 50 and the bonding layer 53 can be improved.

<10. Tenth Embodiment>

Fig. 33A is a perspective view showing one example of the structure of a touch panel according to a tenth embodiment of the present invention. Fig. 33B is a sectional view showing one example of the structure of the touch panel according to the tenth embodiment of the present invention. The tenth embodiment is different from the ninth embodiment in that, as the first conductive optical element 51 being a touch-surface side, the conductive optical element 1 according to the eighth embodiment is provided.

Also as the second conductive optical element 52 at the side of the display device 54, the conductive optical element 1 according to the eighth embodiment is preferably provided. This is because an intimate-contact property between the touch panel 50 and the bonding layer 53 can be improved.

According to the tenth embodiment, because a number of structures 3 are formed also on the touch-surface side of the first conductive optical element 51, a more excellent antireflection property and transmission property can be achieved than the ninth embodiment.

A structure in which, on the concave-convex surface of the substrate 2 on which a number of structures 3 are formed, a conductive film such as the transparent conductive film 4, a metal film having a high conductivity, or a laminated film of the metal film 5 and the transparent conductive film 4 is formed is preferable. By adjusting the design of the structures 3 and the film thickness of the conductive film, a low reflection property and a high transmission property rate are achieved, and a desired resistance can be achieved.

For example, by adjusting the aspect ratio of the structures 3 and the film thickness of the transparent conductive film 4 and the like, the surface resistance of the conductive optical element 1 can be controlled in a wide surface resistance range of several 100 Ω/-several 1000 Ω/. Further, while maintaining the above-mentioned surface resistance range, a low reflection property and a high transmission property can be achieved. Therefore, a decrease in a display quality of the display device because of mounting a touch panel can be suppressed.

In a conventional touch panel such as a digital resistance touch panel or an electrostatic touch panel in which wiring of a conductive film is formed, because reflection coefficients of a conductive film and a substrate are different from each other, the wiring of the conductive film is visible, and a display quality of the display device may be degraded. To the contrary, according to the touch panel of the first embodiment, irrespective of presence/absence of a conductive film, because a low reflection and a high transmittance are achieved, the wiring is invisible, or the wiring cannot be seen enough to be ignored.

<11. Eleventh Embodiment>

Fig. 34 is a sectional view showing one example of the structure of the liquid crystal display device according to an eleventh embodiment. As shown in Fig. 34, a liquid crystal display device 70 includes a liquid crystal panel (liquid crystal unit) including first and second main surfaces, a first polarizer 72 formed on the first main surface, a second polarizer 73 formed on the second main surface, and the touch panel 50 arranged between a liquid crystal panel 71 and the first polarizer 72. The touch panel 50 is a liquid-crystal-display integrated touch panel (so-called inner touch panel).

(Liquid crystal panel)

As the liquid crystal panel 71, for example, one employing a display mode such as a twisted nematic (Twisted Nematic: TN) mode, a super twisted nematic (Super Twisted Nematic: STN) mode, a vertically aligned (Vertically Aligned: VA) mode, a parallel array (IN-Plane Switching: IPS) mode, an optically compensated bend orientation (Optically Compensated Birefringence: OCB) mode, a ferroelectric (Ferroelectric Liquid Crystal: FLC) mode, a polymer dispersed liquid crystal (Polymer Dispersed Liquid Crystal: PDLC) mode, or a phase change guest host (Phase Change Guest Host: PCGH) mode can be used.

(Polarizer)

The first polarizer 72 and the second polarizer 73 are bonded to first and second main surfaces of the liquid crystal panel 71 via bonding layers 74, 75 in a manner that their transmission axes are orthogonal to each other. The first polarizer 72 and the second polarizer 73 pass one of orthogonal polarization components of entering lights, and cut off the other by absorption. As the first polarizer 72 and the second polarizer 73, for example, one in which iodine complex or dichroic dye is arrayed on a polyvinyl alcohol (PVA)-series film in a uniaxial direction can be used. On both surfaces of the first polarizer 72 and the second polarizer 73, a protective layer such as a triacetylcellulose (TAC) film is preferably provided.

(Touch panel)

As the touch panel 50, one similar to that of the ninth or tenth embodiment can be used.

According to the eleventh embodiment, the structure in which the polarizer 72 is shared by the liquid crystal panel 71 and the touch panel 50 is employed, whereby an optical property can be improved.

Examples

Hereinafter, the present invention will be specifically described with examples, but the present invention is not limited to those examples.

(Height H, average arrangement pitch P, aspect ratio)

In the following examples, the height H, the arrangement pitch P, and the aspect ratio of the structures of the conductive optical sheet were obtained as follows.

First, in a state where an ITO film is not film-formed, a picture of the surface shape of the optical sheet was taken by an atomic force microscope (AFM: Atomic Force Microscope). Further, based on the taken AFM image and its cross-section profile, the arrangement pitch P1, the arrangement pitch P2, and the height H of the structure were obtained. Those measurements were repeatedly performed for ten positions randomly-selected from the optical sheet, the measured values were simply averaged (arithmetic average) to obtain the average arrangement pitch P1, the average arrangement pitch P2, and the average height H, and the average values are assumed as the arrangement pitch P1, the arrangement pitch P2, and the height H, respectively. Next, by using those (average) arrangement pitch P1, (average) arrangement pitch P2, and (average) height H, the aspect ratio (= height H/average arrangement pitch P) was obtained. Here, the average arrangement pitch P = (P1+P2+P2)/3.

In the following examples, the film thickness of the transparent conductive film was obtained as follows.

First, the conductive optical sheet was cut so as to include the top portions of the structures, a picture of the cross-section was taken by a transmission electron microscope (TEM: Transmission Electron Microscope), and, based on the taken TEM photograph, the film thickness of the transparent conductive film at the top portions of the structures was measured. Those measurements were repeatedly performed for ten positions randomly-selected from the conductive optical sheet, the measured values were simply averaged (arithmetic average) to obtain the average film thickness, and the average film thickness is assumed as the film thickness of the transparent conductive film.

<1. Optical property of conductive optical sheet>

(Example 1)

First, a glass roll master having an outer diameter of 126 mm was prepared, and a resist layer was attached to the surface of the glass roll master as follows. That is, photoresist was diluted to 1/10 with thinner, and the diluted resist was coated on a cylindrical surface of a glass roll master by a dipping method in a thickness of about 70 nm, whereby a resist layer was attached. Next, by conveying the glass roll master being a recording medium to a roll-master exposure apparatus shown in Fig. 11, and exposing the resist layer with a light, a latent image continuing as one spiral and forming a hexagonal-lattice pattern in the three rows of adjacent tracks was patterned on the resist layer.

Specifically, an area on which a hexagonal-lattice exposure pattern was to be formed was irradiated with a laser light having a power of 0.50 mW/m, with which the glass roll master surface was exposed, to form a concave hexagonal-lattice exposure pattern. Note that the thickness of the resist layer in the row direction of the track rows was about 60 nm, and the resist thickness in the track extending direction was about 50 nm.

Next, a development process was performed on the resist layer on the glass roll master, and the resist layer of an exposed portion was dissolved to perform development. Specifically, an undeveloped glass roll master was mounted on a turntable of a not-shown developing machine, and while rotating it together with the turntable, developer was dropped on the surface of the glass roll master, to develop the resist layer of the surface. As a result, the resist glass master in which the resist layer had openings in a hexagonal-lattice pattern was obtained.

Next, by using a roll etching apparatus, plasma etching was performed in a CHF3 gas atmosphere. As a result, on the surface of the glass roll master, etching was processed only in a hexagonal-lattice pattern portion exposed from the resist layer, etching was not processed in the other area where the resist layer plays a role of a mask, and elliptic-cone-shaped concave portions were formed on the glass roll master. In this case, the etching amount (depth) was adjusted by the etching time period. Finally, by completely removing the resist layer by 02 ashing, a moth-eye glass roll master having a concave-shaped hexagonal-lattice pattern was obtained. The depth of the concave portion in the row direction was larger than the depth of the concave portion in the track extending direction.

Next, the above-mentioned moth-eye glass roll master and a TAC (triacetylcellulose) sheet on which an ultraviolet curable resin has been coated were brought into intimate contact with one another, and were peeled while they were irradiated with ultraviolet rays and cured. As a result, an optical sheet in which a plurality of structures were arrayed on one main surface was obtained. The height H of the structure on the optical sheet was 170 nm, the arrangement pitch was 270, and the aspect ratio was 0.63. Next, by a sputtering method, an ITO film having a film thickness of 20 nm was film-formed on the structures.
In the above-mentioned manner, the target conductive optical sheet was manufactured.

(Example 2)

Except that the conditions of the exposure step and the etching step were adjusted, the height H of the structure was 200 nm, the arrangement pitch P was 240, and the aspect ratio was 0.83, a conductive optical sheet was manufactured similar to Example 1.

(Example 3)

Except that the conditions of the exposure step and the etching step were adjusted, the height H of the structure was 280 nm, the arrangement pitch P was 250, and the aspect ratio was 1.12, a conductive optical sheet was manufactured similar to Example 1.

(Evaluation of surface resistance)

The surface resistances of the conductive optical sheets manufactured as described above were measure by a four-terminal method. Fig. 35 shows a relation between the surface resistance and the ITO film thickness.

(Evaluation of transmittance)

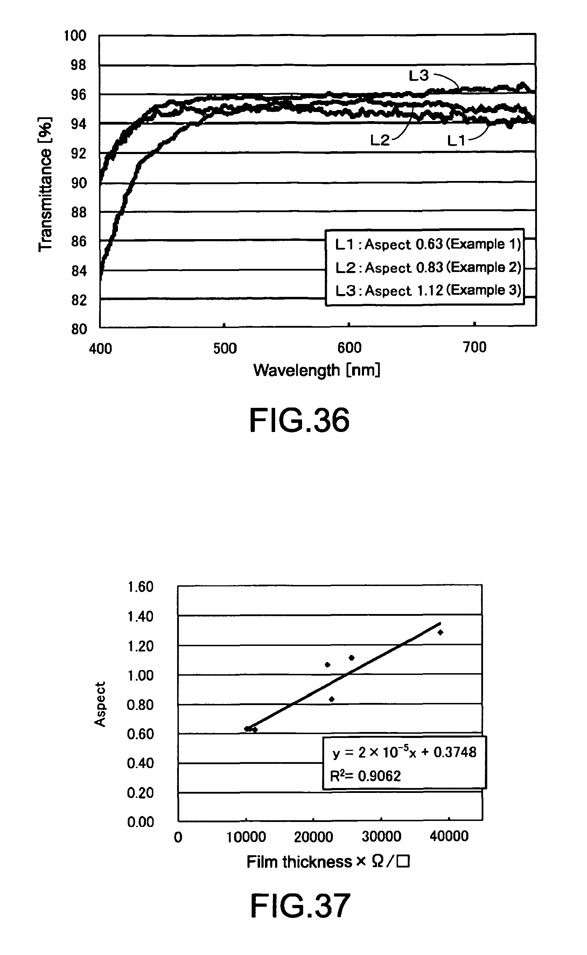

Transmittances of the conductive optical sheets manufactured as described above were evaluated by using an evaluation apparatus (V-550) manufactured by JASCO Corporation. The results are shown in Fig. 36.

(State evaluation of transparent conductive film)

The states of the conductive films of the conductive optical sheet manufactured as described above were evaluated as follows. First, the conductive optical sheets were cut, and the cross-sections were observed by using a transmission electron microscope (TEM). Further, based on the following references, the film formation states of the ITO films were evaluated.

   o: An ITO film is formed modeled on the concave-convex surface of a TAC film.
   x: An ITO film is formed not modeled on the concave-convex surface of a TAC film.

Table 1 shows the structures of the conductive optical elements according to Examples 1-3.

[Table 1]

|  | Material of transparent conductive film | Plate-converted film thickness [nm] | Arrangement pitch P [nm] | Height H [nm] | Aspect ratio | Surface resistance ($\Omega$/) | State of conductive film |
|---|---|---|---|---|---|---|---|
| Example 1 | ITO | 20 | 270 | 170 | 0.63 | 500 | O |
| Example 2 | ITO | 20 | 240 | 200 | 0.83 | 700 | O |
| Example 3 | ITO | 20 | 250 | 280 | 1.12 | 1800 | O |

With reference to Table 1 and Fig. 35, it is understood that, by changing the aspect ratio of the structure in a range of 0.63-1.12, a wide range of surface resistance of 300 $\Omega$/-2000 $\Omega$/ can be achieved.
With reference to Table 1 and Fig. 36, it is understood that, by causing an ITO film to have a shape modeled on the concave-convex surface of a TAC film, although a transparent conductive film is formed on one main surface of a conductive optical sheet, an increase of a reflection coefficient can be suppressed, and a high transmittance of about 95% can be obtained.

As described above, by changing the aspect ratio of the structure in a range of 0.63-1.12, and by causing an ITO film to have a shape modeled on the concave-convex surface of a TAC film, a wide range of surface resistance of 300 $\Omega$/-2000 $\Omega$/ can be achieved, and an excellent transmission property can be achieved.

(Example 4)

First, an optical sheet was manufactured similar to Example 1 except that conditions of the exposure step and the etching step were adjusted and the structure of structures was as follows.

> Arrangement pattern: hexagonal-lattice pattern
> Arrangement pitch P: 270 nm
> Height H: 170 nm
> Aspect ratio: 0.63

Next, by a sputtering method, a transparent conductive film was film-formed on the concave-convex surface of an optical sheet, to manufacture a conductive optical sheet. In the following, the film formation conditions of the transparent conductive film are shown.

> Input power: 3 kW
> Film thickness: 32.50 nm

(Example 5)

A conductive optical sheet was manufactured similar to Example 4 except that the structure of structures was as follows.

> Arrangement pattern: hexagonal-lattice pattern
> Arrangement pitch P: 240 nm
> Height H: 150 nm
> Aspect ratio: 0.63

(Example 6)

A conductive optical sheet was manufactured similar to Example 4 except that the structure of structures was as follows.

> Arrangement pattern: hexagonal-lattice pattern
> Arrangement pitch P: 240 nm
> Height H: 200 nm
> Aspect ratio: 0.83

(Example 7)

A conductive optical sheet was manufactured similar to Example 4 except that the structure of structures was as follows.

> Arrangement pattern: hexagonal-lattice pattern
> Arrangement pitch P: 225 nm
> Height H: 240 nm
> Aspect ratio: 1.07

(Example 8)

A conductive optical sheet was manufactured similar to Example 4 except that the structure of structures was as follows.

Arrangement pattern: hexagonal-lattice pattern
Arrangement pitch P: 270 nm
Height H: 170 nm
Aspect ratio: 0.63

Next, by a sputtering method, a transparent conductive film was film-formed on the concave-convex surface of an optical sheet, to manufacture a conductive optical sheet. In the following, the film formation conditions of the transparent conductive film are shown.

Input power: 3 kW
Film thickness: 43.50 nm

(Example 9)

A conductive optical sheet was manufactured similar to Example 8 except that the structure of structures was as follows.

Arrangement pattern: hexagonal-lattice pattern
Arrangement pitch P: 240 nm
Height H: 150 nm
Aspect ratio: 0.63

(Example 10)

A conductive optical sheet was manufactured similar to Example 4 except that the structure of structures was as follows.

Arrangement pattern: hexagonal-lattice pattern
Arrangement pitch P: 250 nm
Height H: 320 nm
Aspect ratio: 1.28

Next, by a sputtering method, a transparent conductive film was film-formed on the concave-convex surface of an optical sheet, to manufacture a conductive optical sheet. In the following, the film formation conditions of the transparent conductive film are shown.

Input power: 4 kW
Film thickness: 56.96 nm

(Example 11)

A conductive optical sheet was manufactured similar to Example 4 except that the structure of structures was as follows.

Arrangement pattern: hexagonal-lattice pattern
Arrangement pitch P: 270 nm
Height H: 300 nm
Aspect ratio: 1.11

Next, by a sputtering method, a transparent conductive film was film-formed on the concave-convex surface of an optical sheet, to manufacture a conductive optical sheet. In the following, the film formation conditions of the transparent conductive film are shown.

Input power: 4 kW
Film thickness: 42.72 nm

(Surface resistance)

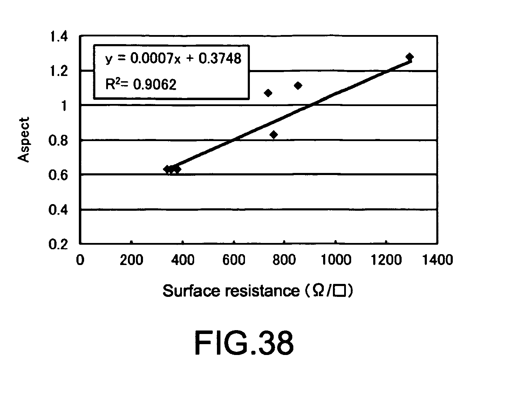

The surface resistance of the conductive optical sheet manufactured as described above was measured by a four-terminal method. Next, a value obtained by standardizing the measured surface resistance by a film thickness 30 nm was obtained. Next, the product of a film thickness and a surface resistance was obtained. The results are shown in Table 2. Fig. 37 shows a relation between the "ITO film thickness x surface resistance" and the "aspect ratio" of the conductive optical sheets of Examples 4-11. Fig. 38 shows a relation between the "ITO film thickness x surface resistance" and the "aspect ratio" when the film thickness of an ITO film is converted to 30 nm.

Table 2 shows the structures of the conductive optical sheets of Examples 4-11 and the evaluation results.

[Table 2]

| | Structures | | | power [kW] | ITO film | | Power property | | Reflection coefficient (wavelength 400nm~750nm average) [%] |
|---|---|---|---|---|---|---|---|---|---|
| | Pitch [nm] | Height [nm] | Aspect | | Film thickness [nm] | Surface resistance [Ω/] | Standardized by 30nm [Ω/] | Film thickness × Surface resistance [nm·Ω/] | |
| Examples 4 | 270 | 170 | 0.63 | 3 | 325 | 311 | 336.9 | 10107 | 1.8 |
| Example 5 | 240 | 150 | 0.63 | 3 | 32.5 | 347 | 375.9 | 11277 | 1.9 |
| Example 6 | 240 | 200 | 0.83 | 3 | 325 | 700 | 758 | 22750 | 09 |
| Example 7 | 225 | 240 | 1.07 | 3 | 32.5 | 680 | 736 | 22100 | 1 |
| Example 8 | 270 | 170 | 0.63 | 3 | 43.5 | 243 | 352 | 10570 | 21 |
| Example 9 | 240 | 150 | 0.63 | 3 | 43.5 | 259 | 375 | 11288 | 2 |
| Example 10 | 250 | 320 | 1.28 | 4 | 56.96 | 680 | 1291 | 38732 | 1 |
| Example 11 | 270 | 300 | 1.11 | 4 | 42.7 | 600 | 854 | 25632 | 09 |

With reference to Table 2, Fig. 37, and Fig. 38, it is understood as follows.

It is understood that a resistance value has a relation with an aspect ratio, and when a film thickness (top portion film thickness) is not changed, in a case where it is wished to decrease a resistance value, it is necessary to decrease an aspect ratio, and, to the contrary, in a case where it is wished to increase a resistance value, it is necessary to increase an aspect ratio.

(Example 12)

First, an optical sheet was manufactured similar to Example 1 except that conditions of the exposure step and the etching step were adjusted and the structure of structures was as follows.

Average arrangement pitch P: 270 nm
Height H: 170 nm
Aspect ratio: 0.63

Next, by a sputtering method, the ITO film was film-formed on the concave-convex surface of an optical sheet, and the surface resistance of the ITO film immediately after the film formation (asdepo: as deposition) was measured. Note that the film thickness of the ITO film was 32.5 nm. Next, the ITO film was subjected to annealing at 130°C for 30 minutes, and the surface resistance of the ITO film after annealing was measured by a four-terminal method. In this manner, a target conductive optical sheet was manufactured.

(Example 13)

An optical sheet was manufactured similar to Example 1 except that conditions of the exposure step and the etching step were adjusted and the structure of structures was as follows. Note that, in the conductive optical sheet manufacturing step, similar to Example 12, the surface resistance of an ITO film was measured immediately after film formation and after annealing.

Average arrangement pitch P: 240 nm
Height H: 200 nm
Aspect ratio: 0.83

(Example 14)

An optical sheet was manufactured similar to Example 1 except that conditions of the exposure step and the etching step were adjusted and the structure of structures was as follows. Note that, in the conductive optical sheet manufacturing step, similar to Example 12, the surface resistance of an ITO film was measured immediately after film formation and after annealing.

Average arrangement pitch P: 220 nm
Height H: 250 nm
Aspect ratio: 0.83

(Example 15)

A conductive optical sheet was manufactured similar to Example 1 except that the ITO film thickness was 43.5 nm. Note that, in the conductive optical sheet manufacturing step, similar to Example 12, the surface resistance of an ITO film was measured immediately after film formation and after annealing.

(Example 16)

A conductive optical sheet was manufactured similar to Example 1 except that the ITO film thickness was 43.5 nm. Note that, in the conductive optical sheet manufacturing step, similar to Example 12, the surface resistance of an ITO film was measured immediately after film formation and after annealing.

(Example 17)

A conductive optical sheet was manufactured similar to Example 1 except that the ITO film thickness was 43.5 nm. Note that, in the conductive optical sheet manufacturing step, similar to Example 12, the surface resistance of an ITO film was measured immediately after film formation and after annealing.

(Transmittance, reflection coefficient)

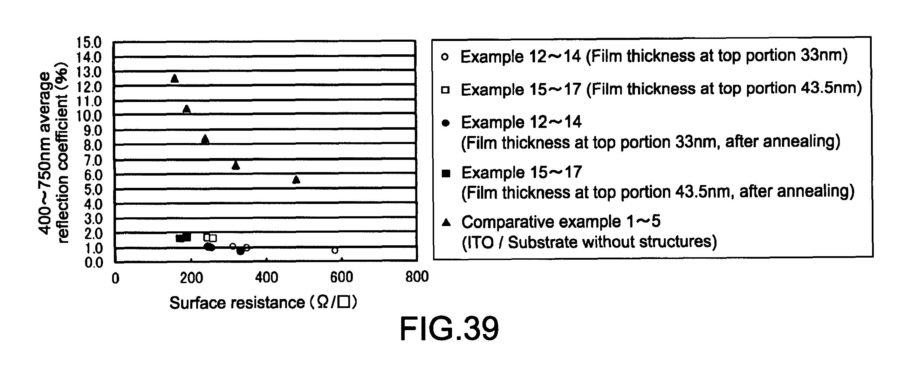

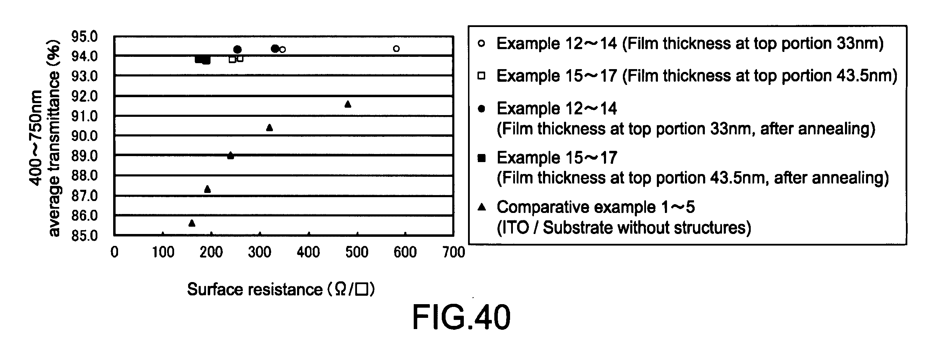

Average transmittances and average reflection coefficients of the conductive optical sheets manufactured as described above were evaluated by using an evaluation apparatus (V-550) manufactured by JASCO Corporation. The results are shown in Fig. 39 and Fig. 40. Note that the average transmittance and the average reflection coefficient are the average transmittance and the average reflection coefficient in a wavelength band of 400 nm-750 nm.

(Comparative Example 1)

The average transmittance and the average reflection coefficient when an ITO film having a thickness of 10 nm was film-formed on a glass substrate having a smooth flat surface were obtained by simulation. Note that the average transmittance and the average reflection coefficient are the average transmittance and the average reflection coefficient in a wavelength band of 400 nm-750 nm.

(Comparative Example 2)

The average transmittance and the average reflection coefficient were obtained by simulation similar to Comparative Example 1 except that the film thickness of an ITO film was 15 nm.

(Comparative Example 3)

The average transmittance and the average reflection coefficient were obtained by simulation similar to Comparative Example 1 except that the film thickness of an ITO film was 20 nm.

(Comparative Example 4)

The average transmittance and the average reflection coefficient were obtained by simulation similar to Comparative Example 1 except that the film thickness of an ITO film was 25 nm.

(Comparative Example 5)

The average transmittance and the average reflection coefficient were obtained by simulation similar to Comparative Example 1 except that the film thickness of an ITO film was 30 nm.

Table 3 and Table 4 show the structures of the conductive optical sheets of Examples 12-17 and the evaluation results. Table 5 shows the simulation conditions and the evaluation results of Comparative Examples 1-5.
Fig. 39 is a graph showing the average reflection coefficients of the conductive optical sheets of Examples 12-17 and Comparative Examples 1-5. Fig. 40 is a graph showing the average transmittances of the conductive optical sheets of Examples 12-17 and Comparative Examples 1-5.

[Table 3]

| | | Structures | | | ITO film | | | Evaluation | |
|---|---|---|---|---|---|---|---|---|---|
| | | Pitch [nm] | Height [nm] | Aspect | Film thickness [nm] | Asdepo [Ω/] | After annealing (130°C. 30min) [Ω/] | Average transmittance (400~750nm) | Average reflection coefficients (400~750nm)) |
| Example 12 | | 270 | 170 | 0.63 | 325 | 311 | 245 | 92.81 | 1.08 |
| Example 13 | | 240 | 200 | 0.83 | 32.5 | 347 | 254 | 94.32 | 0.98 |

(continued)

| | Structures | | | ITO film | | | Evaluation | |
|---|---|---|---|---|---|---|---|---|
| | Pitch [nm] | Height [nm] | Aspect | Film thickness [nm] | Asdepo [Ω/] | After annealing (130°C. 30min) [Ω/] | Average transmittance (400~750nm) | Average reflection coefficients (400~750nm)) |
| Example 14 | 220 | 250 | 1.14 | 32.5 | 581 | 331 | 94.35 | 0.75 |
| Asdepo: immediately after film formation (as deposition) | | | | | | | | |

[Table 4]

| | Structures | | | ITO film | | | Evaluation | |
|---|---|---|---|---|---|---|---|---|
| | Pitch [nm] | Height [nm] | aspect Aspect | Film thickness [nm] | Asdepo [Ω/] | After annealing (130°C. 30min) [Ω/] | Average transmittance (400~750nm) | Average reflection coefficient (400~750nm) |
| Example 15 | 270 | 170 | 0.63 | 43.5 | 243 | 189 | 93.79 | 1.68 |
| Example 16 | 240 | 200 | 0.83 | 43.5 | 259 | 173 | 93.85 | 1.63 |
| Example 17 | 220 | 250 | 1.14 | 43.5 | — | — | — | — |
| Asdepo : Immediately after film formation (as deposition) | | | | | | | | |

[Table 5]

| | Thickness [nm] | Surface resistance [Ω/] | Average transmittance (400~750nm) | Average reflection coefficient (400~750nm) |
|---|---|---|---|---|
| Comparative example 1 | 10 | 480 | 91.56 | 5.6 |
| Comparative example 2 | 15 | 320 | 90.4 | 6.61 |
| Comparative example 3 | 20 | 240 | 89 | 8.4 |
| Comparative example 4 | 25 | 192 | 87.3 | 10.4 |
| Comparative example 5 | 30 | 160 | 85.6 | 12.5 |

With reference to Table 3-Table 5, Fig. 39, and Fig. 40, it is understood as follows.
In Comparative Examples 1-5, there is a tendency that as the film thickness of an ITO film increases and the surface resistance decreases, the average reflection coefficient increases and the average transmittance decreases. To the contrary, in Examples 12-17, there is a tendency that, even if the film thickness of an ITO film increases and the surface resistance decreases, the average reflection coefficient and the average transmittance hardly change.

In the above, although the embodiments and the examples of the present invention have been described specifically, the present invention is not limited the above-mentioned embodiments and examples, and can be variously modified based on the technical thought of the present invention.

For example, the numerical values, shapes, materials, structures, and the like described in the above-mentioned embodiments and examples are merely examples, and different numerical values, shapes, materials, structures, and the like may be used, as necessary.

Further, the respective structures of the above-mentioned embodiments can be combined with each other within the gist of the present disclosure.

Further, in the above-mentioned embodiments, the optical device may further include a low-refractive-index layer on the concave-convex surface which is the side that the structures are formed. The low-refractive-index layer preferably mainly includes a material having a refractive index lower than that of a material structuring the substrate, the structures, and the projecting portion. As such a material of the low-refractive-index layer, for example, an organic material such as a fluorine-series resin or an inorganic low refractive index material such as LiF or $MgF_2$ may be employed.

Further, in the above-mentioned embodiments, the optical device may be manufactured by thermal transfer. Specifically, a method including heating a substrate mainly containing a thermoplastic resin, and pressing a stamp (mold) such as a roll master or a disk master on the substrate soft enough because of the heating, to thereby manufacture an optical device may be employed.

Although in the above-mentioned embodiments, an example in which the present invention is applied to a resistive touch panel has been described, the present invention is not limited to this example, but may be applicable to an electrostatic, ultrasonic, or optical touch panel.

Description of Reference Numerals

| | |
|---|---|
| 1 | optical device |
| 2 | substrate |
| 3 | structure |
| 4 | transparent conductive film |
| 5 | metal film |
| 6 | projecting portion |
| 7 | hard coat layer |
| 8 | transparent conductive layer |
| 11 | roll master |
| 12 | substrate |
| 13 | structure |
| 14 | resist layer |
| 15 | laser light |
| 16 | latent image |
| 41 | disk master |
| 42 | master |

| 43 | structure |
| 51 | first conductive optical element |
| 52 | second conductive optical element |
| 53, 55, 57, 60, 61, 74, 75 | bonding layer |
| 54 | liquid crystal display device |
| 56, 72, 73 | glass substrate |
| 58 | polarizer |
| 59 | top plate (front member) |
| 71 | liquid crystal panel (liquid crystal unit) |

**Claims**

1. A conductive optical element having an antireflection function, comprising:

   a substrate having a surface;
   a number of structures arranged on the surface of the substrate at fine pitches equal to or smaller than a wavelength of a visible light; and
   a transparent conductive film formed on the structure, wherein
   the transparent conductive film has a shape modeled on shapes of the structures,
   an aspect ratio of the structures is 0.2 or more and 1.28 or less, and
   a film thickness of the transparent conductive film is 9 nm or more and 50 nm or less.

2. The conductive optical element according to claim 1, wherein
   a surface resistance of the transparent conductive film is 100 Ω/ or more and 5000 Ω/ or less.

3. The conductive optical element according to claim 1, wherein
   the transparent conductive film includes indium tin oxide or zinc oxide.

4. The conductive optical element according to claim 1, wherein
   the transparent conductive film is a mixed state of amorphous and polycrystalline.

5. The conductive optical element according to claim 1, wherein
   a relation D1>D3>D2 is satisfied where a film thickness at top portions of the structures is D1, a film thickness at inclined surfaces of the structures is D2, and a film thickness between the structures is D3, and
   the film thickness D2 at the inclined surfaces of the structures is 9 nm or more and 30 nm or less.

6. The conductive optical element according to claim 5, wherein
   the film thickness D1 of the transparent conductive film at the top portions of the structures is in a range of 25 nm or more and 50 nm or less,
   the film thickness D2 of the transparent conductive film at the inclined surfaces of the structures is in a range of 9 nm or more and 30 nm or less, and
   the film thickness D3 of the transparent conductive film between the structures is in a range of 9 nm or more and 50 nm or less.

7. The conductive optical element according to claim 1, further comprising:

   a conductive film formed on the structures, wherein
   the conductive film includes a metal-series material having a high conductivity, and has a shape modeled on the shapes of the structures.

8. The conductive optical element according to claim 8, wherein
the metal includes at least one kind selected from a group consisting of Ag, Pt, A1, Au, and Cu.

9. The conductive optical element according to claim 1, wherein
the structures are arranged so as to form a plurality of rows of tracks on the surface of the substrate, and form a hexagonal-lattice pattern, a quasi-hexagonal-lattice pattern, a rectangular-lattice pattern, or a quasi-rectangular-lattice pattern, and
the structure has an elliptic-cone or elliptic-truncated-cone shape having a long-axis direction in an extending direction of the tracks.

10. A conductive optical element, comprising:

a substrate having a surface; and
a transparent conductive layer formed on the surface of the substrate, wherein
the transparent conductive layer has a surface on which a number of structures are formed at fine pitches equal to or smaller than a wavelength of a visible light, and
the structure has a transparent conductivity.

11. The conductive optical element according to claim 10, wherein
the transparent conductive layer and the structures include at least one kind of material selected from a group consisting of conductive polymer, silver-series filler, carbon nanotube, and indium tin oxide powder.

**FIG.1**

FIG.2

FIG.3

EP 2 521 011 A1

FIG.4

FIG.5

FIG.6

FIG.7

FIG.8

A

— — T3

— — T2

— — T1

3

B

— — T3

— — T2

— — T1

3

a  b  c

# FIG.9

FIG.10

FIG.11

A
12

B
14
12

C
16
15
14
12

# FIG.12

[Row direction (Y-axis direction)]    [Track extending direction (X-axis direction)]

A

B

C

# FIG.13

EP 2 521 011 A1

FIG.14

A

B

C

D

E

F

Uc

T4

T3

T2

T1

Tp

P2

P1

−θ

θ

4
5
3

12

T1, T3, ···

T2, T4, ···

T1, T3, ···

T2, T4, ···

1

2

3

3

## FIG.15

FIG.16

A

B

Uc

13

T4

T3

T2

T1

Tp

P2

P1

Y

Z

X

FIG.17

A

B

C

D

FIG.18

FIG.19

FIG.20

EP 2 521 011 A1

FIG.21

EP 2 521 011 A1

FIG.22

FIG.23

FIG.24

# FIG.25

# FIG.26

3t Top portion    3

Pa First change point    St Step

Pb Second change point

3b Lower portion

## FIG.27

FIG.28

EP 2 521 011 A1

**FIG.29**

**FIG.30**

FIG.31

A

B

## FIG.32

FIG.33

## FIG.34

## FIG.35

FIG.36

FIG.37

FIG.38

FIG.39

FIG.40

EP 2 521 011 A1

## INTERNATIONAL SEARCH REPORT

| | International application No. |
|---|---|
| | PCT/JP2010/007387 |

| A. CLASSIFICATION OF SUBJECT MATTER |
|---|
| *G06F3/041*(2006.01)i, *G02B1/11*(2006.01)i, *G02F1/1333*(2006.01)i, *G09F9/00* (2006.01)i |
| According to International Patent Classification (IPC) or to both national classification and IPC |

| B. FIELDS SEARCHED |
|---|
| Minimum documentation searched (classification system followed by classification symbols) |
| G02B1/10-1/12, G02F1/1333, G06F3/03-3/047, G09F9/00 |
| Documentation searched other than minimum documentation to the extent that such documents are included in the fields searched |
| Jitsuyo Shinan Koho          1922-1996   Jitsuyo Shinan Toroku Koho   1996-2011<br>Kokai Jitsuyo Shinan Koho    1971-2011   Toroku Jitsuyo Shinan Koho   1994-2011 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2004-127244 A (NISSHA Printing Co., Ltd.), 22 April 2004 (22.04.2004), entire text; all drawings & US 2005/0207173 A1 & WO 2003/100592 A1 | 1-11 |
| A | JP 2008-059147 A (Alps Electric Co., Ltd.), 13 March 2008 (13.03.2008), entire text; all drawings (Family: none) | 1-11 |
| A | JP 2003-050673 A (Dainippon Printing Co., Ltd.), 21 February 2003 (21.02.2003), entire text; all drawings (Family: none) | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 March, 2011 (28.03.11) | 05 April, 2011 (05.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/007387

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-305005 A  (Asahi Glass Co., Ltd.),<br>05 November 1999 (05.11.1999),<br>entire text; all drawings<br>(Family: none) | 1-11 |
| A | JP 2003-177207 A  (Konica Corp.),<br>27 June 2003 (27.06.2003),<br>entire text; all drawings<br>(Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003136625 A

**Non-patent literature cited in the description**

- Kagaku Binran. Pure Chemistry. I-537